# EUROPÄISCHE PATENTSCHRIFT

(11) **EP 3 482 834 B1**
(45) Veröffentlichungstag und Bekanntmachung des Hinweises auf die Patenterteilung: **15.02.2023**
(21) Anmeldenummer: 17201687.5
(22) Anmeldetag: 14.11.2017
(51) Int. Cl.: B05D 1/36, B05D 7/14, B05D 7/00, C09D 5/10, C09D 7/61, C23F 13/06, C23F 13/14, C08K 3/08

(54) **KORROSIONSSCHUTZBESCHICHTUNG**
ANTI-CORROSION COATING
REVÊTEMENT DE PROTECTION CONTRE LA CORROSION

(43) Veröffentlichungstag der Anmeldung: 15.05.2019
(73) Patentinhaber: EWALD DÖRKEN AG, 58313 Herdecke (DE)
(72) Erfinder: ROTH, Marcel, 40589 Düseldorf (DE); REUSMANN, Gerhard, 45259 Essen (DE); BÖHM, Sandra, 58256 Ennepetal (DE)
(74) Vertreter: Von Rohr Patentanwälte Partnerschaft mbB

(56) Entgegenhaltungen:
- EP-A1- 2 933 355
- EP-A1- 3 153 552
- EP-A1- 3 153 557

## Beschreibung

Die vorliegende Erfindung betrifft das technische Gebiet des Korrosionsschutzes, insbesondere des kathodischen Korrosionsschutzes.

Insbesondere betrifft die vorliegende Erfindung ein Beschichtungssystem, speziell ein Korrosionsschutzbeschichtungssystem, zur Erzeugung eines kathodischen Korrosionsschutzes auf einem metallischen Substrat.

Weiterhin betrifft die vorliegende Erfindung ein Verfahren zur Herstellung des Beschichtungssystems sowie ein mit dem Beschichtungssystem beschichtetes metallisches Substrat.

Schließlich betrifft die vorliegenden Erfindung ein Kit zur Herstellung des Beschichtungssystems.

Korrosionserscheinungen an Metallen werden auf allen Gebieten der Technik beobachtet und sind von großer Bedeutung, da die Haltbarkeit bzw. Einsatzdauer von Maschinen, Fahrzeugen, Industrieanlagen oder auch Gebäuden oftmals im entscheidenden Maße von den Korrosionseigenschaften der verwendeten Metalle abhängig ist. Korrosion führt dazu, dass Metallteile ersetzt oder instand gesetzt werden müssen, was stets mit einem Aufwand an Zeit, Material und Kosten verbunden ist.

Gemäß DIN ISO 8044 ist Korrosion die physikochemische Wechselwirkung zwischen einem Metall und seiner Umgebung, die zu einer Veränderung der Eigenschaft des Metalls führt und die zu erheblichen Beeinträchtigungen der Funktionen des Metalls, der Umgebung oder des technischen Systems, in welchem das Metall verwendet wird, führen kann. Bei der Korrosion von Metallen handelt es sich in der Regel um elektrochemische Vorgänge, nämlich die Oxidation von Metallen durch Luftsauerstoff, gegebenenfalls in Gegenwart von Elektrolytlösungen, unter Ausbildung von Metalloxidschichten.

Da Korrosionsvorgänge die Haltbarkeit bzw. Einsatzzeit von Metallen bzw. Metallbauteilen oftmals bestimmen, ist es notwendig, die Korrosionsanfälligkeit und Korrosionsgeschwindigkeit von Metallen zu verringern. Um Metalle vor Korrosion zu schützen, werden einerseits passive Systeme - zum Beispiel Beschichtungen, wie Schutzlacke - eingesetzt, welches das Metall vor Umwelteinflüssen und somit Korrosion schützen soll. Andererseits werden auch aktive Systeme verwendet, bei welchen das zu schützende Metall unter Ausnutzung elektrochemischer Vorhänge als Kathode eingesetzt und somit eine Oxidation des Metalls verhindert wird bzw. gebildete Metallionen umgehend reduziert werden. Der kathodische Korrosionsschutz kann einerseits durch Anlegen einer äußeren elektrischen Spannung erhalten werden, es ist andererseits jedoch auch möglich, dass das schützende Metall mit einem unedleren Metall, d.h. einem Metall mit einem niedrigeren elektrochemischen Standardpotential, elektrisch in Kontakt zu bringen. Die beiden Metalle bilden dann ein elektrochemisches System, bei welchem das unedlere Metall die Anode, die sogenannte Opferanode, darstellt und oxidiert wird, während das edlere Metall die Kathode ist, an welcher reduziert wird.

Eine gängige Form des kathodischen Korrosionsschutzes ist die Beschichtung von Metallen bzw. Metallbauteilen mit einem unedleren Metall. Speziell beim Korrosionsschutz von Stahl wird dabei häufig auf die Verzinkung, d.h. eine Beschichtung auf Basis von Zink oder Zinklegierungen, zurückgegriffen.

Bei der Verzinkung wird üblicherweise Stahl, insbesondere Stahlblech, durch Eintauchen in Bäder aus geschmolzenem Zink im Rahmen der Feuerverzinkung mit elementarem Zink beschichtet.

Darüber hinaus ist es auch möglich, Stahlbleche bzw. Stahlbauteile elektrolytisch oder galvanisch durch Anlegung einer äußeren Spannung an Zinkionen enthaltende Elektrolytbäder zu erhalten.

Ein Spezialfall der Verzinkung ist die Verwendung von Zinklamellenüberzügen, auch Zinklamellenprimer genannt. Zinklamellenüberzüge bzw. Zinklamellenprimer enthalten Zinklamellen, d.h. plättchenförmige Zinkpigmente, in einem überwiegend anorganischen Bindemittel. Die Mischung aus Bindemittel und Zinklamellen wird als Dispersion auf das zu schützende Metallteil aufgebracht und das Bindemittel anschließend vernetzt, wodurch eine geschlossene homogene Schicht mit einer Stärke von 5 bis 15 µm erhalten wird. Zinklamellenüberzüge weisen trotz Einbettung der Zinkpartikel in eine Bindemittelmatrix elektrische Leitfähigkeit auf und gewährleisten so einen hohen Schutz, insbesondere zeigen Zinklamellenüberzüge im Salzsprühtest am Ritz gemäß DIN ISO 9227 bei vergleichbarer Schichtdicke gegenüber sowohl feuerverzinkten als auch galvanisch bzw. elektrolytisch verzinkten Metallteilen eine deutlich verbesserte Korrosionsbeständigkeit auf.

Die überwiegend anorganische Matrix, in welche die Zinklamellen eingebettet sind von Zinklamellenüberzügen bzw. -primern besteht üblicherweise hauptsächlich aus Siliziumdioxid oder Titandioxid. Typische Zinklamellenüberzüge, welche in Form der entsprechenden Beschichtungszusammensetzung auf ein Substrat aufgebracht werden, sind beispielsweise in der WO 2007/130838 A2 beschrieben.

Die EP 3 153 552 A1 offenbart ebenfalls eine Korrosionsschutzbeschichtung sowie ein Verfahren zu ihrer Herstellung. Die Beschichtung weist zwei Schichten auf, wobei die erste Schicht in Form einer kathodischen Korrosionsschutzbeschichtung ausgebildet ist, sowie die zweite Schicht in Form einer weiteren Korrosionsschutzbeschichtung in Form einer Sauerstoffbarrierebeschichtung. Insbesondere offenbart sind Beschichtungssysteme bei denen Zinklamellenprimer als erste Schicht auf ein Substrat aufgebracht werden. Anschließend wird eine zweite Schicht auf Wasserbasis aufgetragen, welche hydrophile organische polymere Verbindungen jedoch keine ionischen Anteile enthält.

Im Gegensatz zur Feuerverzinkung oder zur galvanischen Verzinkung bieten Zinklamellenüberzüge bzw. Zinklamellenprimer prinzipiell die Möglichkeit, den kathodischen Korrosionsschutz nur lokal begrenzt und nachträglich, d.h. nach Einbau bzw. Montage, auf ein Metallteil bzw. Bauteil aufzubringen. Zinklamellenprimer ermöglichen somit zumindest prinzipiell die partielle und/oder nachträgliche Beschichtung von Gegenständen aus Kompositmaterialien oder von hitze- und/oder feuchtigkeitsempfindlichen Bauteilen. Auch für Reparaturzwecke, beispielsweise wenn an größeren Stahlkonstruktionen Teile erneuert werden müssen, bieten sich eine Ausstattung der Reparaturstelle vor Ort mit Korrosionsschutzsystemen auf Basis von Zinklamellenprimern an.

Der tatsächliche Einsatz von Zinklamellenprimern für derartige lokal begrenzte oder mobile Anwendungen ist jedoch stark eingeschränkt, da gängige Zinklamellenprimersysteme bei Temperaturen zwischen 200 und 300 °C ausgehärtet bzw. vernetzt werden. Diese Temperaturen können insbesondere bei Verbundbauteilen, welche Kunststoffe oder Holz enthalten, nicht angewendet werden. Auch für mobile Anwendungen sind derartige Temperaturbehandlungen nachteilig, da die notwendigen Temperaturen zwar durch Infrarot- und Heizstrahler erzeugt werden können, das Prozedere jedoch aufwendig und somit kostenintensiv ist.

Darüber hinaus kommt hinzu, dass eine Vielzahl von Stahlbauteilen, welche nicht vollständig mit einer Korrosionsschutzbeschichtung überzogen werden können oder sollen, bereits während des Herstellungsprozesses mit elektronischen Komponenten oder Anschlüssen für elektronischen Komponenten oder auch Kugellagern oder Schmierstoffen ausgestattet werden, so dass diese Bauteile anschließend keiner weiteren Behandlung, bei welchen Temperaturen von über 100 °C auftreten, unterzogen werden können.

Es ist zwar prinzipiell möglich, spezielle lösemittel- und wasserfreie Zinklamellenprimer mit einem Feststoffanteil von 100 Gew.-% - sogenannte 100%-Systeme bzw. All-Solids-Systeme - einzusetzen, welche bei Raumtemperatur oder nur leicht erhöhter Temperatur vernetzen. Mit derartigen Systemen ist es oftmals möglich, einen ausreichenden Korrosionsschutz zu gewährleisten, welcher jedoch gegenüber bei 200 bis 300 °C vernetzten Systemen deutlich herabgesetzt ist. Darüber hinaus ist auch die mechanische Belastbarkeit derartiger, bei Raumtemperatur härtender Zinklamellenprimer deutlich herabgesetzt, was sich beispielsweise in einem erhöhten Abrieb zeigt: So hinterlassen bei Raumtemperatur oder nur leicht erhöhter Temperatur ausgehärtete Zinklamellenprimer bei Berührung metallisch glänzende Rückstände an den Händen oder einem Tuch. Dies ist bei Bauteilen, welche häufiger berührt werden, nicht hinzunehmen und auch darüber hinaus nachteilig, da es dem Kunden den Eindruck einer nur geringen Wertigkeit vermittelt. Darüber hinaus weisen bei Raumtemperatur ausgehärtete Zinklamellenprimer oftmals nicht nur eine unzureichende Kohäsion auf, sondern auch eine mangelnde Adhäsion am Untergrund: Die Beschichtung lässt sich einfach wieder von einem metallischen Substrat entfernen, was sich in unzureichenden Ergebnissen im Tesaabriss-Test zeigt. Für Anwendungen, für welche eine gute Haftung des Zinklamellenprimers benötigt wird, beispielweise für mechanische belastbare Bauteile oder auch für Bauteile, welche nachfolgend mit weiteren Beschichtungen versehen werden sollen, ist diese geringe mechanische Belastbarkeit nicht akzeptabel.

Darüber hinaus weisen bei Raumtemperatur aushärtende Zinklamellenprimer eine Aushärtungszeit von mehreren Tagen auf, was mit einer deutlichen Prozessverlangsamung und dem Bereitstellen erheblicher Lagerkapazitäten verbunden ist.

Es fehlt somit weiterhin im Stand der Technik an einem kathodischen Korrosionsschutzsystem, insbesondere einem Zinklamellenprimer, welches bzw. welcher lokal begrenzt appliziert und bei Raumtemperatur oder geringfähig erhöhter Temperatur ausgehärtet und vernetzt werden kann, gegenüber gängigen Systemen verbesserten Korrosionsschutz und eine höhere mechanische Belastbarkeit, insbesondere Abriebfestigkeit, aufweist. Auch sind derzeit keine bei Raumtemperatur aushärtenden kathodischen Korrosionsschutzsysteme bekannt, welche rasch aushärten, so dass beschichtete Substarte zeitnah nach der Beschichtung verbaut bzw. verwendet werden könne.

Eine Aufgabe der vorliegenden Erfindung ist somit darin zu sehen, die zuvor genannten mit dem Stand der Technik verbundenen Nachteile und Probleme zu vermeiden, zumindest jedoch abzuschwächen.

Eine weitere Aufgabe der vorliegenden Erfindung ist darin zu sehen, ein System bereit zu stellen, welches kathodischen Korrosionsschutz gewährleistet und lokal begrenzt angewendet werden kann, insbesondere auch in mobilen Systemen.

Darüber hinaus ist eine weitere Aufgabe der vorliegenden Erfindung darin zu sehen, ein Korrosionsschutzsystem bereitzustellen, welches gegenüber gängigen Systemen eine verbesserte Korrosionsbeständigkeit sowie eine verbesserte mechanischen Belastbarkeit, insbesondere eine verbesserte Abriebfestigkeit, aufweist.

Darüber hinaus ist eine weitere Aufgabe der vorliegenden Erfindung darin zu sehen, ein Beschichtungssystem bereitzustellen, welches einfach und problemlos unter einer Vielzahl von Bedingungen appliziert und angewendet werden kann.

Gegenstand der vorliegenden Erfindung gemäß einem ersten Aspekt der vorliegenden Erfindung ist ein Beschichtungssystem, insbesondere ein Korrosionsschutzbeschichtungssystem, zur Erzeugung eines kathodischen Korrosionsschutzes nach Anspruch 1; weitere vorteilhafte Ausgestaltung dieses Erfindungsaspektes sind Gegenstand der diesbezüglichen Unteransprüche.

Weiterer Gegenstand der vorliegenden Erfindung gemäß einem zweiten Aspekt der vorliegenden Erfindung ist ein Verfahren zur Herstellung eines Beschichtungssystems, insbesondere eines Korrosionsschutzbeschichtungssystems zur Erzeugung eines kathodischen Korrosionsschutzes auf einem metallischen Substrat, nach Anspruch 14; weitere vorteilhafte Ausgestaltungen dieses Erfindungsaspektes sind Gegenstand des diesbezüglichen Unteranspruchs.

Wiederrum weiterer Gegenstand der vorliegenden Erfindung gemäß einem dritten Aspekt der vorliegenden Erfindung ist ein metallisches Substrat, aufweisend ein Beschichtungssystem nach Anspruch 16.

Schließlich ist wiederrum weiterer Gegenstand der vorliegenden Erfindung gemäß einem vierten Aspekt der vorliegenden Erfindung ein Kit zur Herstellung eines Beschichtungssystems, insbesondere eines Korrosionsschutzbeschichtungssystems nach Anspruch 17.

Es versteht sich von selbst, dass Besonderheiten, Merkmale, Ausgestaltungen und Ausführungsformen sowie Vorteile oder dergleichen durch die nachfolgend - zu Zwecken der Vermeidung von unnötigen Wiederholungen - nur zu einem Erfindungszweck ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- oder Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können. Darüber hinaus versteht es sich von selbst, dass alle gewichts- oder mengenbezogenen Prozentangaben vom Fachmann derart ausgewählt werden, dass in der Summe 100% bzw. 100 Gew.-% resultieren; dies versteht sich jedoch von selbst. Dies vorausgeschickt wird im Folgenden die vorliegende Erfindung näher beschrieben.

Gegenstand der vorliegenden Erfindung - gemäß einem **ersten** Aspekt der vorliegenden Erfindung - ist somit ein Beschichtungssystem, insbesondere ein Korrosionsschutzbeschichtungssystem, zur Erzeugung eines kathodischen Korrosionsschutzes auf einem metallischen Substrat, aufweisend mindestens zwei Schichten, wobei das Beschichtungssystem umfasst
(a) eine erste Schicht in Form einer kathodischen Korrosionsschutzbeschichtung, welche unter Einwirkung von Feuchtigkeit bei Temperaturen von weniger als 100 °C vernetzt, und
(b) eine zweite Schicht in Form einer Beschichtung, welche durch eine wässrig basierte Beschichtungszusammensetzung erhalten ist,
wobei die zweite Schicht (4) mindestens eine hydrophile anorganische oder organische polymere Verbindung enthält, und wobei die anorganische oder organische polymere Verbindung ionische Anteile aufweist und/oder die Beschichtungszusammensetzung zusätzlich ionische Bestandteile in Mengen von 0,1 bis 5 Gew.-%, bezogen auf die Beschichtungszusammensetzung, enthält.

Denn, wie die Anmelderin überraschend herausgefunden hat, lassen sich die Korrosionsbeständigkeit und insbesondere die mechanische Widerstandsfähigkeit, speziell die Abriebfestigkeit, von kathodischen Korrosionsschutzbeschichtungen, welche durch Wasser, insbesondere Feuchtigkeit, vernetzen, deutlich verbessern, wenn auf die kathodische Korrosionsschutzbeschichtung eine weitere Beschichtung auf Basis eines wasserhaltigen Bindemittels aufgebracht wird.

Auf diese Weise härtet das Bindemittel der kathodischen Korrosionsschutzbeschichtung rasch und vollständig aus und die Haftung der kathodischen Korrosionsschutzbeschichtung an dem metallischen Substrat wird deutlich verbessert. Darüber hinaus hat sich auch gezeigt, dass nicht nur die Adhäsion der kathodischen Korrosionsschutzbeschichtung, beispielsweise eines Zinklamellenprimer, deutlich verbessert wird, sondern auch die Kohäsion der kathodischen Korrosionsschutzbeschichtung, d.h. der ersten Schicht des erfindungsgemäßen Beschichtungssystems. Insbesondere wird bei bloßer Berührung kein Abrieb, beispielsweise von Zinklamellen, mehr beobachtet. Die erste Schicht, insbesondere die kathodische Korrosionsbeschichtung, wird nachfolgend auch als Base-Coat bezeichnet.

Durch die gezielte Aushärtung einer durch Wasser, insbesondere durch Feuchtigkeit, vernetzenden kathodischen Korrosionsschutzbeschichtung durch einen darauf aufgetragenen wasserbasierten Topcoat bzw. eine wasserbasierte Deckbeschichtung ist es möglich, die kathodische Korrosionsschutzbeschichtung bei niedrigen Temperaturen, insbesondere bei Raumtemperatur oder zumindest bei Temperaturen unterhalb von 100 °C, zu vernetzen.

Auf diese Weise eignet sich das erfindungsgemäße Beschichtungssystem, insbesondere Korrosionsbeschichtungssystem, in hervorragender Weise beispielsweise für mobile Anwendungen.

Darüber hinaus muss die Beschichtung von metallischen Substraten mit der erfindungsgemäß eingesetzten Korrosionsschutzbeschichtung nicht in speziellen Klimakammern bei definierter Luftfeuchtigkeit erfolgen; vielmehr wird die zur Vernetzung benötigte Feuchtigkeit durch die weitere Beschichtung, insbesondere die zweite Schicht, den sogenannten Topcoat bereitgestellt. Das erfindungsgemäße Beschichtungssystem ermöglicht somit eine prozesstechnische Vereinfachung gegenüber bestehenden Systemen und eröffnet neue Anwendungsmöglichkeiten für feuchtigkeitsvernetzende Korrosionsschutzbeschichtungen bei niedrigen Temperaturen.

Das erfindungsgemäße Beschichtungssystem weist im Vergleich zu Systemen, welche bei 200 bis 300 °C gehärtet bzw. vernetzt werden, eine nur geringfügig schlechtere mechanische Belastbarkeit auf.

Darüber hinaus ermöglicht das erfindungsgemäße Beschichtungssystem die Verarbeitung von kommerziell erhältlichen Zinklamellen, welche normalerweise mit Stearinsäure behandelt sind, ohne weitere Vorbehandlung in raumtemperaturhärtenden Systemen, da die Kohäsion des erfindungsgemäßen Beschichtungssystems so hoch ist, dass unter normalen Umständen kein oder nur ein geringer Abrieb beobachtet wird.

Üblicherweise zeigen bei Raumtemperatur vernetzte Zinklamellenprimer auf Basis von Siloxan und/oder Titanaten eine mikroporöse Struktur, wodurch eine geringe Adhäsion und Kohäsion der Beschichtung bedingt ist; dies wird im Rahmen der vorliegenden Erfindung jedoch vermieden.

Das erfindungsgemäße Beschichtungssystem eignet sich in hervorragender Weise speziell für die partielle Beschichtung von Bauteilen, insbesondere von Bauteilen aus Kompositmaterialien, oder auch für die Beschichtung von Bauteilen, welche nicht auf Temperatur von 100 °C oder höher erhitzt werden dürfen, wie beispielsweise Bremsscheiben.

Unter einem Substrat ist im Rahmen der vorliegenden Erfindung jedes geeignete dreidimensionale Objekt oder jede Oberfläche zu verstehen, auf welche das erfindungsgemäße Beschichtungssystem aufgebracht werden kann. Vorzugsweise handelt es sich bei dem Substrat jedoch um einen Gegenstand, insbesondere ein Bauteil, auf welches das Beschichtungssystem zumindest partiell aufgebracht wird.

Im Rahmen der vorliegenden Erfindung werden besonders gute Ergebnisse erhalten, wenn die erste Schicht eine anorganisch basierte Matrix aufweist. Besonders gute Ergebnisse werden in diesem Zusammenhang erhalten, wenn die Matrix, insbesondere die anorganisch basierte Matrix, organisch modifiziert ist.

Unter eine anorganisch basierten Matrix ist im Rahmen der vorliegenden Erfindung ein insbesondere ausgehärtetes Bindemittelsystem zu verstehen, welches insbesondere zumindest im Wesentlichen aus anorganischen Materialien aufgebaut ist, wie beispielsweise Siliciumdioxid, Titanoxid oder Zirkoniumoxid. In dieser anorganisch basierten Matrix sind - insbesondere bei Verwendung von beispielsweise Zinklamellenprimern - oftmals Füllstoffe oder anorganische Pigmente, insbesondere Korrosionsschutzpigmente, eingelagert.

Unter einer organisch modifizierten anorganisch basierten Matrix ist im Rahmen der vorliegenden Erfindung zu verstehen, dass die insbesondere zumindest im Wesentlichen anorganisch basierte Matrix organische Funktionalitäten, insbesondere in Form von Alkylgruppen, wie beispielsweise Methyl oder Ethyl, Vinylgruppen oder Phenylgruppen aufweist, welche an Metalle oder Halbmetalle in der Matrix gebunden sind. Durch eine organische Modifizierung der anorganisch basierten Matrix ist das Beschichtungssystem insgesamt weniger spröde und flexibler und kann sich so beispielsweise besser temperaturinduzierten Längenänderungen des metallischen Substrates anpassen. Darüber hinaus wird durch einen gewissen Anteil an organischen Resten auch eine höhere Kompatibilität mit einer gegebenenfalls aufgetragenen organisch basierten Deckbeschichtung erzielt. Insbesondere bewirkt die organische Modifizierung, vorzugsweise in Form von organischen Resten an Silicium, Titan oder Zirkonium, eine Verringerung der Vernetzungsdichte, was zu einer erhöhten Flexibilität der Beschichtung und einem verringerten Schrumpf führt.

Was das Material des anorganisch basierten Matrix anbelangt, so hat es sich bewährt, wenn die anorganisch basierte Matrix anorganische Oxide, insbesondere Oxide des Silizium, Titans und/oder Zirkoniums, enthält oder insbesondere zumindest im Wesentlichen hieraus besteht. Besonders bevorzugt wird es in diesem Zusammenhang, wenn die anorganisch basierte Matrix Siliciumdioxid und/oder Titandioxid, bevorzugt Titandioxid, enthält oder insbesondere zumindest im Wesentlichen hieraus besteht.

Im Rahmen der vorliegenden Erfindung wird die anorganisch basierte Matrix üblicherweise durch Kondensationsreaktionen anorganischer und/oder organischer Gruppen und/oder Polymerisationsreaktionen organischer Gruppen, vorzugsweise Kondensationsreaktionen, aus Silanen, Polysilanen, Silanhydrolysaten, Polysiloxanen, Silikanaten, Titanaten, Polytitanaten und Zirkonaten erhalten. Im Rahmen der vorliegenden Erfindung hat es sich besonders bewährt, wenn die anorganisch basierte Matrix durch Kondensationsreaktionen insbesondere anorganischer Gruppen aus Silanen, Silanhydrolysaten, Polysiloxanen, Titanaten und Polytitanaten und deren Mischungen erhältlich ist. Insbesondere mit den zuvor genannten anorganischen bzw. anorganisch basierten Verbindungen lassen sich besonders widerstandsfähige anorganische Bindemittelsysteme bereitstellen.

Wie zuvor bereits ausgeführt, vernetzt die erste Schicht unter Einwirkung von Wasser. Erfindungsgemäß ist es in diesem Zusammenhang vorgesehen, dass die erste Schicht durch Einwirkung von Feuchtigkeit, insbesondere durch Einwirkung von Luftfeuchtigkeit, vernetzt. Insbesondere Bindemittelsysteme auf Basis von Titanaten, Zirkonaten oder auch spezielle siloxanbasierte Systeme vernetzen durch Polykondensation unter Einwirkung von Feuchtigkeit, insbesondere Luftfeuchtigkeit. Die erste Schicht bzw. das Bindemittelsystem der ersten Schicht des erfindungsgemäßen Beschichtungssystem muss dabei nicht längere Zeit einer größeren Menge flüssigen Wassers ausgesetzt sein, es genügt vielmehr eine ausreichende Verteilung von Wasserdampf oder kleine Wassertröpfchen in der Gasphase, d.h. der umgebenden Atmosphäre, oder auf der Beschichtungsoberfläche. So kann die Beschichtungszusammensetzung zur Herstellung der zweiten Schicht beispielsweise in feiner Verteilung auf die erste Schicht aufgesprüht werden. Durch die Zerstäubung der wässrigen Bindemittelzusammensetzung der zweiten Schicht wird eine ausreichende Feuchtigkeit zur Vernetzung der ersten Schicht des erfindungsgemäßen Beschichtungssystem zur Verfügung gestellt. Es hat sich herausgestellt, dass eine feine Zerstäubung der wässrigen Bindemittelzusammensetzung der zweiten Schicht zu besonders guten Ergebnissen führt, insbesondere einer erhöhten Stabilität der ersten Schicht. Dies ist vermutlich darauf zurückzuführen, dass bedingt durch die feine Zerstäubung Wassermoleküle schneller in die erste Schicht diffundieren können als bei größeren Wassertropfen oder gar Wasserfilmen.

Weiterhin hat die Verwendung von wässrigen Bindemittelzusammensetzungen für die zweite Schicht den Vorteil, dass bei Verwendung von Silicium-, Titan- oder Zirkonium-basierten Bindemittelsystemen der ersten Schicht in Kombination mit Metallpartikeln - wie beispielsweise Zinklamellenprimer - Konversionsprodukte, beispielsweise ZnSiO₄, in der ersten Schicht gebildet werden, welche die Poren der ersten Schicht schließen und den Korrosionsschutz auf diese Weise weiter erhöhen.

Wie zuvor ausgeführt wird im Rahmen der vorliegenden Erfindung die erste Schicht des erfindungsgemäßen Beschichtungssystems vorzugsweise bei niedrigen Temperaturen ausgehärtet bzw. vernetzt.

Im Rahmen der vorliegenden Erfindung wird die erste Schicht bei Temperaturen von weniger als 100 °C, bevorzugt weniger als 90 °C, vorzugsweise weniger als 80 °C, vernetzt.

Im Rahmen der vorliegenden Erfindung wird es bevorzugt, wenn die erste Schicht entweder bei Temperaturen von 5 bis 100 °C vernetzt. Gleichermaßen werden sehr gute Ergebnisse erhalten, wenn die erste Schicht bei Raumtemperatur, insbesondere bei Temperaturen im Bereich von 5 bis 30 °C vernetzt und/oder wenn die erste Schicht bei Temperaturen im Bereich von 20 bis 100 °C, insbesondere 30 bis 90 °C, vorzugweise 50 bis 80 °C vernetzt. Eine Vernetzung bei höheren Temperaturen führt dabei insbesondere zu einer beschleunigten Aushärtung bzw. Vernetzung der ersten Schicht, welche bei Wahl geeigneter Bindemittelsysteme innerhalb weniger Minuten abgeschlossen ist. Dies ist ein deutlicher Vorteil gegenüber bisherigen bei niedrigen Temperaturen, insbesondere bei Raumtemperatur härtenden Systemen, welche in speziellen Klimakammern bei definierter Luftfeuchtigkeit bis zu 7 Tage gelagert werden müssen, um zumindest einigermaßen akzeptable Abriebfestigkeiten zu erhalten.

Im Rahmen der vorliegenden Erfindung ist es üblicherweise vorgesehen, dass die erste Schicht Metallpartikel enthält. Der kathodische Korrosionsschutz wird somit vorzugsweise durch die Verwendung von Metallpartikeln aus einem im Vergleich zum Metallsubstrat unedleren Metall bereitgestellt, d. h. einem Metall, welches ein kleineres Standardpotential als das zu schützende Metall aufweist.

Im Allgemeinen weist die erste Schicht mindestens 50 Gew.-%, insbesondere mindestens 60 Gew.-%, vorzugsweise mindestens 70 Gew.-%, Metallpartikel, bezogen auf die erste Schicht, auf.

Gleichfalls werden sehr gute Ergebnisse erhalten, wenn die erste Schicht einen Anteil an Metallpartikeln im Bereich von 50 bis 95 Gew.-%, insbesondere 60 bis 95 Gew.-%, vorzugsweise 70 bis 90 Gew.-%, bezogen auf die erste Schicht, aufweist.

Die erste Schicht weist somit vorzugsweise einen sehr hohen Anteil an Metallpartikeln auf, um dauerhaften kathodischen Korrosionsschutz zu gewährleisten.

Was die Art der Partikel anbelangt, so können diese aus sämtlichen geeigneten Metallpartikeln ausgewählt werden. Es hat sich jedoch bewährt, wenn die erste Schicht plättchenförmige und/oder kornförmige, insbesondere sphärische, Metallpartikel, aufweist.

Gemäß einer bevorzugten Ausführungsform ist es in diesem Zusammenhang vorgesehen, dass die erste Schicht allein kornförmig, insbesondere sphärische, Metallpartikel, aufweist, insbesondere als Korrosionsschutzpigmente.

Gemäß einer weiteren bevorzugten Ausführungsform der vorliegenden Erfindung weist die erste Schicht plättchenförmige und kornförmige, insbesondere sphärische Metallpartikel auf. Durch die Verwendung von plättchenförmigen und kornförmigen, insbesondere sphärischen, Metallpartikeln kann die Korrosionsschutzwirkung der kathodischen Korrosionsschutzbeschichtungen nochmals deutlich verbessert werden, da plättchenförmige Metallpartikel, die sogenannten Lamellen, deutlich verbesserten Korrosionsschutz gewährleisten. Allerdings steigt mit zunehmendem Anteil an plättchenförmigen Metallpartikeln, d.h. Lamellen, die Viskosität der Beschichtungszusammensetzung, aus welcher die kathodische Korrosionsbeschichtung erhalten wird, stark an.

Wenn die erste Schicht sowohl plättchenförmige als auch kornförmige, insbesondere sphärische, Metallpartikel aufweist, so hat es sich bewährt, wenn die erste Schicht ein gewichtsbezogenes Verhältnis von plättchenförmigen zu kornförmigen Metallpartikeln im Bereich von 19 : 1 bis 1 : 19, insbesondere 10 : 1 bis 1 : 15, vorzugsweise 1 : 1 bis 1 : 12, bevorzugt 1 : 2 bis 1 : 10, besonders bevorzugt 1 : 3 bis 1 : 9, aufweist. Vorzugweise weist die erste Schicht somit einen hohen Anteil an insbesondere kornförmigen, vorzugsweise sphärischen, Metallpartikeln auf. Dies betrifft insbesondere lösemittelfreie Systeme oder Systeme, welche weniger als 5 Gew.-% an Lösemitteln, vorzugsweise weniger als 3 Gew.-% an Lösemitteln, enthalten, die Gewichtsprozent-Angaben beziehen sich dabei auf die jeweiligen Beschichtungszusammensetzungen, aus welchen die Beschichtung erhalten wird.

Gemäß einer wiederrum bevorzugten Ausführungsform der vorliegenden Erfindung weist die erste Schicht plättchenförmige Metallpartikel auf. Insbesondere weist die erste Schicht gemäß dieser Ausführungsform der vorliegenden Erfindung vorzugsweise allein plättchenförmige Metallpartikel als Korrosionsschutzpigmente auf. Da die Verwendung von plättchenförmigen Metallpartikeln, bzw. Lamellen mit einem starken Anstieg der Viskosität mit der Beschichtungszusammensetzung verbunden ist, weisen derartige Beschichtungszusammensetzungen einen Anteil an organischen Lösungsmitteln von bis zu 20 Gew.-%, auf, um die Viskosität der Beschichtungszusammensetzung einzustellen.

Plättchenförmige Metallpartikel werden im allgemeinen Sprachgebrauch auch Flakes oder Lamellen genannt. Plättchenförmige Metallpartikel weisen in einer Raumrichtung eine deutlich geringere Ausdehnung auf, welche nachfolgend als Dicke bezeichnet wird; die Ausdehnung in den beiden anderen Raumrichtungen wird nachfolgend als Durchmesser bezeichnet. Plättchenförmige Metallpartikel weisen insbesondere mindestens eine Hauptausdehnungsrichtung auf. Kornförmige Metallpartikel sind unregelmäßig geformte Metallpartikel, wogegen sphärische Metallpartikel näherungsweise Kugelgestalt besitzen. Die Verwendung von sphärischen Metallpartikeln ist gegenüber der Verwendung von kornförmigen Metallpartikeln üblicherweise bevorzugt.

Was nun die Dimensionierung der Metallpartikel anbelangt, so kann diese in weitern Bereichen variieren.

Im Allgemeinen ist es vorgesehen, dass die plättchenförmigen Metallpartikel eine Dicke von 50 bis 1.000 nm, insbesondere 60 bis 750 nm, vorzugsweise 80 bis 600 nm, bevorzugt 100 bis 500 nm aufweisen.

Gleichermaßen kann es vorgesehen sein, dass die plättchenförmigen Metallpartikel einen Durchmesser, insbesondere eine Länge entlang ihrer Hauptausdehnungsrichtung, von 1 bis 25 µm, insbesondere 2 bis 20 µm, vorzugsweise 5 bis 18 µm, bevorzugt 5 bis 15 µm, aufweisen.

Wenn im Rahmen der vorliegenden Erfindung kornförmige, insbesondere sphärische Metallpartikel verwendet werden, so hat es sich bewehrt, wenn die Metallpartikel Durchmesser im Bereich von 500 nm bis 20 µm, insbesondere 500 nm bis 10 µm, 500 nm bis 5 µm, aufweisen.

Was nun das Material anbelangt, aus welchem die Metallpartikel gebildet sind, so hat es sich bewährt, wenn die Metallpartikel auf Basis von Aluminium, Zink oder deren Legierungen ausgebildet sind. Besonders gute Ergebnisse werden in diesem Zusammenhang erhalten, wenn die Metallpartikel auf Basis von reinem Zink und/oder von Zinklegierungen ausgebildet sind.

In diesem Zusammenhang werden insbesondere dann besonders gute Ergebnisse erhalten, wenn sphärische oder kornförmige Metallpartikel aus reinem Zink bestehen und plättchenförmige Metallpartikel aus Zinklegierungen.

Wenn Metallpartikel auf Basis von Zinklegierungen verwendet werden, so sind die Zinklegierungen üblicherweise ausgewählt aus Zink-Bismut-Legierungen, Zink-Aluminium-Legierungen und/oder Zink-Aluminium-Magnesium-Legierungen. Besonders bevorzugt wird es in diesem Zusammenhang, wenn die Zinklegierungen ausgewählt sind aus Zink-Aluminium-Legierungen und/oder Zink-Aluminium-Magnesium-Legierungen. Die besten Ergebnisse werden erhalten, wenn die Zinklegierung eine Zink-Aluminium-Magnesium-Legierung ist.

Darüber hinaus kann es gleichermaßen vorgesehen sein, dass die erste Schicht weitere Füllstoffe aufweist. Wenn die erste Schicht mindestens einen weiteren Füllstoff aufweist, so hat es sich bewährt, wenn die erste Schicht den Füllstoff in Mengen von 0,5 bis 10 Gew.-%, insbesondere 1 bis 8 Gew.-%, vorzugsweise 1 bis 5 Gew.-%, bezogen auf die erste Schicht, aufweist.

Als Füllstoffe können nahezu beliebige partikuläre, unter Anwendungsbedingungen stabile Inhaltstoffe, insbesondere anorganische Mineralien, Gläser, keramische Stoffe und Metalle, verwendet werden. Es hat sich jedoch herausgestellt, dass besonders gute Ergebnisse erhalten werden, wenn der Füllstoff ausgewählt ist aus Metallen, insbesondere aus Mg, Sn, Ni, Mn, Bi, W oder Edelstahl sowie deren Mischungen und Legierungen.

Gleichfalls werden besonders gute Ergebnisse erhalten, wenn der Füllstoff ausgewählt ist aus der Gruppe von Bornitrid, Wolframcarbid und Gläsern. Die Füllstoffe können alternativ zu oder gemeinsam mit den metallischen Füllstoffen verwendet werden.

Was nun die zweite Schicht des erfindungsgemäßen Beschichtungssystems anbelangt, so ist die zweite Schicht üblicherweise in Form einer transparenten Schicht, insbesondere eines Klarlacks ausgebildet. Eine transparente Ausbildung der zweiten Schicht ist nicht zwingend notwendig, jedoch wird im Rahmen der Erfindung üblicherweise die zweite Schicht in Form eines Klarlacks verwendet. Eine Pigmentierung der zweiten Schicht ist üblicherweise nicht vorgesehen, da die zweite Schicht in erster Linie der Aushärtung und besseren Haftung der ersten Schicht dient und mit einer äußerst geringen Schichtdicke aufgebracht werden soll.

Im Rahmen der vorliegenden Erfindung ist es vorgesehen, dass die zweite Schicht mindestens eine hydrophile anorganische oder organische polymere, Verbindung enthält oder insbesondere zumindest im Wesentlichen hieraus besteht. Besonders gute Ergebnisse werden in diesem Zusammenhang erhalten, wenn die zweite Schicht mindestens eine hydrophile anorganische oder organische polymere Verbindung enthält oder insbesondere zumindest im Wesentlichen hieraus besteht.

Unter einer anorganischen polymeren Verbindung ist im Rahmen der vorliegenden Erfindung eine ein dreidimensionales Netzwerk, wie beispielsweise Siliciumdioxid, Titandioxid oder Zirkoniumdioxid, bildende Verbindung zu verstehen. Besonders gute Ergebnisse werden - wie zuvor bereits erwähnt - erhalten, wenn mindestens eine hydrophile anorganische oder organische oligomere polymere Verbindung eingesetzt wird.

Die hydrophile anorganische oder organische oligomere oder polymere Verbindung ist polar und enthält vorzugsweise ionische Anteile.

Insbesondere wird es besonders bevorzugt, wenn die anorganische oder organische polymere Verbindung ionische Anteile aufweist und/oder den hydrophilen anorganischen oder organischen polymeren Verbindungen zusätzlich ionische Verbindungen beigemischt sind. Besonders bevorzugt wird es in diesem Zusammenhang, wenn die ionische Verbindung einen Teil des Bindemittels bildet und immobilisiert in der Beschichtung vorliegt. Auf diese Weise wird eine Aktivierung insbesondere von Zinklamellen-Primern erreicht, wie nachfolgend noch ausgeführt wird.

Falls im Rahmen der vorliegenden Erfindung eine hydrophobe organische Verbindung verwendet wird, so hat es sich bewährt, wenn die hydrophobe organische Verbindung ausgebildet ist aus C₁₂- bis C₂₅-Carbonsäuren, Wachsen, PVDF und PTFE. Bevorzugt wird es in diesem Zusammenhang, wenn die hydrophobe organische Verbindung ausgewählt ist aus C₁₅- bis C₂₀-Carbonsäuren, Wachsen, PVDF und PTFE. Unter der Abkürzung PVDF ist das thermoplastische Polymer Polyvinylidenfluorid zu verstehen und PTFE steht für Polytetrafluorethylen.

Wenn im Rahmen der vorliegenden Erfindung eine hydrophile anorganische oder organische polymere Verbindung verwendet wird, so hat es sich bewährt, wenn die anorganische und/oder organische polymere Verbindung ausgewählt ist aus der Gruppe von Silikaten, Wassergläsern, Silanhydrolysaten, Siliciumdioxid, Silikonen, Wachsen, organischen Polymeren und deren Mischungen.

Besonders gute Ergebnisse werden in diesem Zusammenhang erhalten, wenn die hydrophile anorganische und/oder organische polymere Verbindung ausgewählt ist aus der Gruppe von Silikaten, Siliciumdioxid, insbesondere Silikasolen; organischen Polymeren und deren Mischungen.

Was die organischen Polymere anbelangt, so sind diese üblicherweise ausgewählt aus kationischen organischen Polymeren, anionischen organischen Polymeren und deren Mischungen.

Unter einem anionischen organischen Polymer ist dabei ein organisches Polymer zu verstehen, welches deprotonierbare Säurefunktionen enthält, insbesondere Carboxyl-, Sulfon-, Phospon- oder Phosphorsäuregruppen, welche durch Neutralisation mit Basen, vorzugsweise mit Aminen oder Ammoniak, in ein anionisches Polymer, überführt werden. Die anionischen Polymere werden auch als kationisch stabilisierte Polymere bezeichnet, da das anionische Polymer Kationen als Gegenion, insbesondere Ammoniumionen, aufweist.

Unter einem kationischen Polymer ist im Rahmen der vorliegenden Erfindung ein Polymer zu verstehen, welches Amingruppen aufweist, welche durch eine Säure, insbesondere einer organischen Säure, wie beispielsweise Sulfon- oder Phosphonisäureverbindungen oder einer Carbonsäure, protoniert und in einer kationische Form überführt werden kann. Die deprotonierte Säure bzw. das deprotonierte Säurederivat fungiert dabei, als Gegenion. Kationische Polymere werden daher auch als anionisch stabilisierte Polymere bezeichnet.

Derartige insbesondere kationisch stabilisierte Polymere, sind insbesondere auf Basis von Polyurethanen, Styrolacrylaten oder Polyacrylaten ausgebildet. Besonders gute Ergebnisse werden in diesem Zusammenhang erhalten, wenn das kationisch stabilisierte Polymer ausgewählt ist aus aliphatischen Polycarbonat-Polyurethanen und Polyacrylaten.

Die organischen Polymere weisen vorzugsweise ein gewichtsmittleres Molekulargewicht Mw von mehr als 1.000 g/mol, vorzugweise mehr als 2.000 g/mol auf. Besonders bevorzugt wird es, wenn die organischen Polymere gewichtsmittleres Molekulargewicht Mw im Bereich von 1.000 bis 50.000 g/mol, insbesondere 1.500 bis 20.000 g/mol, vorzugsweise 2.000 bis 10.000 g/mol, aufweisen.

Gemäß einer besonders bevorzugten Ausführungsform der vorliegenden Erfindung werden der Beschichtungszusammensetzung zur Erzeugung der zweiten Schicht aktive Bestandteile von Konversionsbeschichtungen zugegeben, wie beispielsweise Hexafluortitansäure, Hexafluorzirkonsäure, Phosphorsäure oder Phosphonsäuren. Durch die Verwendung derartiger ionischer Bestandteile oder in wässriger Umgebung in Ionen dissoziierender Verbindungen von Konversionsbeschichtungen bzw. durch die Verwendung von ionischen Polymeren kann insbesondere eine Aktivierung von Zinklamellenprimern erreicht werden. Insbesondere kann auf diese Weise erreicht werden, dass Zinklamellenprimer im Kondenswassertest deutlich verbesserte Korrosionsbeständigkeiten aufweisen. Während Zinklamellenprimer beispielsweile im Salzsprühtest am Ritz hervorragende Korrosionsbeständigkeiten zeigen, ist die Beständigkeit gegenüber Kondenswasser deutlich vermindert. Feuerverzinkte oder galvanisch verzinkte Metallteile zeigen ein vergleichbares Verhalten, was vermutlich auf die Abwesenheit von Elektrolyten im Kondenswasser zurückzuführen ist. Durch die Abwesenheit von Elektrolyten ist die Leitfähigkeit innerhalb des ausgehärteten Zinklamellenprimers herabgesetzt und der kathodische Korrosionsschutz kann nicht entsprechend seinen Möglichkeiten ausgeschöpft werden. Durch die Verwendung von ionischen Bestandteilen in einer Deckbeschichtung, insbesondere in der zweiten Schicht, werden jedoch die benötigten Elektrolyte bereitgestellt, und insgesamt eine Aktivierung der ersten Schicht beobachtet, so dass deutlich verbesserte Korrosionsbeständigkeiten erzielt werden können. Die Verbesserung der Korrosionsbeständigkeiten ist vermutlich auf Bildung von Metalloxiden, wie beispielsweise Zinkoxid, oder von Konversionsprodukten, insbesondere Phosphaten, Silikaten, Fluoriden und Oxiden des Zinks, zurückzuführen. Die Oxide und Konversionsprodukte schließen die Poren der Korrosionsschutzbeschichtung und verbessern somit den Korrosionsschutz der Beschichtung.

Was nun das Substrat anbelangt, so hat es sich bewährt, wenn das Substrat mindestens ein Metall ausgewählt aus Aluminium und Eisen, vorzugsweise Eisen, enthält oder aus dessen Legierungen besteht. Besonders bevorzugt besteht das Substrat aus Stahl. Das Substrat kann dabei aus einem oder mehreren Teilen bestehen, insbesondere auch aus Kompositmaterialien, welche nur teilweise mit dem erfindungsgemäßen Beschichtungssystem beschichtet werden.

Im Rahmen der vorliegenden Erfindung ist es üblicherweise vorgesehen, dass die erste Schicht zwischen der zweiten Schicht und dem Substrat angeordnet ist.

Weiterhin ist im Rahmen der vorliegenden Erfindung im Allgemeinen die zweite Schicht unmittelbar auf die erste Schicht aufgebracht.

Das erfindungsgemäße Beschichtungssystem bildet somit bevorzugt ein zweischichtiges Beschichtungssystem, welches unmittelbar auf eine Metalloberfläche, insbesondere ein metallischen Substrat, aufgebracht ist. Es kann jedoch auch vorgesehen sein, dass das erfindungsgemäße Beschichtungssystem auf eine Konversionsschicht aufgebracht wird, welche zuvor auf die Metalloberfläche aufgetragen wurde.

Gemäß einer besondere Ausführungsform der vorliegenden Erfindung kann es vorgesehen sein, dass die zweite Schicht auf Bereiche des Substrats aufgebracht wird, welche nicht von der ersten Schicht bedeckt sind. Gemäß dieser besonderen Ausführungsform der vorliegenden Erfindung reicht somit die zweite Schicht über die erste Schicht hinaus. Dies kann beispielsweise bei Substraten vorgesehen sein, welche aus unterschiedlichen Materialien bestehen und beispielsweise neben Metall Kunststoff oder Holz aufweisen. Bei derartigen Substraten wird üblicherweise lediglich der Metallteil mit der ersten Schicht beschichtet, während die zweite Schicht das gesamte Substrat bedecken kann. Darüber hinaus ist es auch möglich, dass an Metallteilen lediglich nur örtlich begrenzt kathodischer Korrosionsschutz erzielt werden soll bzw. benötigt wird, während an anderen Stellen des Substrates eine lediglich korrosionsverzögernde Wirkung durch die zweite Schicht, ausreicht oder nur ein temporärer Korrosionsschutz benötigt wird. Temporärer Korrosionsschutz, durch welchen Metallteile beispielsweise während des Transportes vor Seeklima oder Straßenstaub, welcher oftmals geringe Mengen Streusalz enthält, geschützt werden, wird bislang durch Verwendung von Ölen bereitgestellt. Die Verwendung von Ölen hat jedoch den Nachteil, dass das Metallteil vor Verwendung gegebenenfalls nochmals gereinigt und entfettet werden muss. Dies gilt insbesondere für Bremsscheiben, deren Bremsfläche nur temporär bis zum Einbau geschützt werden soll.

Im Rahmen der vorliegenden Erfindung wird es weiterhin bevorzugt, wenn das Beschichtungssystem zwei Schichten aufweist, insbesondere aus zwei Schichten besteht.

Was nun die Dicke des Beschichtungssystems anbelangt, so hat es sich bewährt, wenn das Beschichtungssystem eine Schichtdicke im Bereich von 1 bis 50 µm, insbesondere 2 bis 40 µm, vorzugsweise 4 bis 30 µm, bevorzugt 5 bis 25 µm, besonders bevorzugt 10 bis 20 µm, aufweist.

Die erste Schicht des erfindungsgemäßen Beschichtungssystems weist üblicherweise eine Schichtdicke im Bereich von 0,5 bis 50 µm, insbesondere 1 bis 40 µm, vorzugsweise 3 bis 28 µm, bevorzugt 5 bis 20 µm, besonders bevorzugt 7 bis 15 µm, auf.

Was nun die Schichtdicke der zweiten Schicht anbelangt, so ist es im Rahmen der vorliegenden Erfindung üblicherweise vorgesehen, dass die zweite Schicht eine Schichtdicke im Bereich von 0,5 bis 20 µm, insbesondere 0,5 bis 15 µm, vorzugsweise 1 bis 12 µm, bevorzugt 2 bis 10 µm, aufweist.

Im Rahmen der vorliegenden Erfindung kann somit ein hervorragender Korrosionsschutz mit einem äußerst dünnen zumindest zweischichtigen Beschichtungssystem erreicht werden. Die dünnen zweischichtigen Beschichtungssysteme nach der Erfindung beeinflussen somit die Passgenauigkeit von Bauteilen nicht negativ.

Im Allgemeinen sind die erste und die zweite Schicht des erfindungsgemäßen Beschichtungssystems aus entsprechenden Beschichtungszusammensetzungen erhältlich.

In diesem Zusammenhang kann es insbesondere vorgesehen sein, dass die erste Schicht aus einer Beschichtungszusammensetzung, insbesondere einer kathodischen Korrosionsschutzzusammensetzung, aufweisend
(A) mindestens ein Bindemittel und
(B) Metallpartikel,
erhalten wird.

Unter einem Bindemittel ist im Rahmen der vorliegenden Erfindung - insbesondere im Hinblick auf die erste Schicht des erfindungsgemäßen Beschichtungssystems - ein Matrixbildner zu verstehen, welcher insbesondere nach Vernetzung und/oder Entfernen des Lösemittels die anorganisch basierte Matrix der ersten Schicht bildet. Das Bindemittel der Beschichtungszusammensetzung der ersten Schicht ist üblicherweise ausgewählt aus Silanen, Polysilanen, Silanhydrolysaten, Polysiloxanen, Silikonaten, Titanaten, Polytitanaten, Zirkonaten und deren Mischungen. Die zuvor genannten Bindemittel bilden dreidimensionale Netzwerke, welche Füllstoffe und insbesondere auch Metallpartikel einschließen können.

Besonders gute Ergebnisse werden im Rahmen der vorliegenden Erfindung erhalten, wenn das Bindemittel ausgewählt ist aus Silanen, Silanhydrolysaten, Polysiloxanen, Titanaten, Polytitanaten und deren Mischungen.

Gleichfalls werden besonders gute Ergebnisse erhalten, wenn das Bindemittel der Beschichtungszusammensetzung der ersten Schicht ausgewählt ist aus Titanaten, Polytitanaten und deren Mischungen. Wenn im Rahmen der vorliegenden Erfindung das Bindemittel ausgewählt ist aus Titanaten, Polytitanten und deren Mischungen, so kann es vorgesehen sein, dass die Beschichtungszusammensetzung bis zu 5 Gew.-% Silane, Silanhydrolysate und/oder Polysiloxane, bezogen auf die Beschichtungszusammensetzung enthält. Besonders bevorzugt wird es in diesem Zusammenhang, wenn die Beschichtungszusammensetzung das Silan, Silanhydrolysat und/oder das Polysiloxan in Mengen von 0,5 bis 5 Gew.-%, vorzugsweise 2 bis 5 Gew.-%, bezogen auf die Beschichtungszusammensetzung enthält.

Insbesondere titanatbasierte Bindemittelsysteme härten in Gegenwart von Wasser auch bei niedrigen Temperaturen schnell und vollständig aus.

Wenn im Rahmen der vorliegenden Erfindung ein Titanat als Bindemittel verwendet wird, so hat es sich bewährt, wenn das Titanat ausgewählt ist aus Titan-Tetrabutylat, Titan-2-Ethylhexyloxid sowie polymerem Butyltitanat und deren Mischungen. Besonders bevorzugt werden dabei Mischungen der drei vorgenannten Titanate in jeweils gleichen Gewichtsanteilen verwendet.

Durch die Verwendung der siliciumbasierten Co-Bindemittel kann insbesondere die Flexibilität der resultierenden Beschichtungen erhöht werden.

Gemäß einer bevorzugten Ausführungsform der vorliegenden Erfindung ist das Bindemittel ausgewählt aus Titanaten, Polytitanaten und deren Mischungen in Kombination mit Silanen, Silanhydrolysaten und deren Mischungen.

Wenn im Rahmen der vorliegenden Erfindung ein Polysiloxan als Bestandteil des Bindemittels der Beschichtungszusammensetzung für die erste Schicht eingesetzt wird, so hat es sich bewährt, wenn das Polysiloxan ausgewählt ist aus silanolfunktionalisierten Polysiloxanen und/oder alkoxyfunktionalisierten Polysiloxanen sowie deren Mischungen. Besonders gute Ergebnisse werden in diesem Zusammenhang erhalten, wenn das Polysiloxan ausgewählt aus silanol- und alkoxyfunktionalisierten Alkylpolysiloxanen, welche Methyl- und/oder Ethylgruppen aufweisen, und Phenylpolysiloxanen. Gemäß einer bevorzugten Ausführungsform der vorliegenden Erfindung ist das Polysiloxan ausgewählt aus silanolfunktionalisierten und/oder alkoxyfunktionalisiertes Ethylpolysiloxanen, Methylpolysiloxanen, Phenylpolysiloxanen und deren Mischungen.

Wenn im Rahmen der vorliegenden Erfindung ein Silan als Bestandteil der Beschichtungszusammensetzung für die erste Schicht verwendet wird, so hat es sich bewährt, wenn das Silan ausgewählt ist aus der Gruppe von alkoxy-, acetoxy-, epoxy-, vinyl-, oxime-, mercapto- und aminofunktionalisierten Silanen, insbesondere Aminsilanen und/oder Alkoxysilanen, vorzugsweise alpha-Aminoalkoxysilanen.

In diesem Zusammenhang hat es sich bewährt, wenn das Silan ausgewählt ist aus Silanen der allgemeinen Formel I

R₄₋ₙSiXₙ (I)

mit
- R =: C₁- bis C₃-Alkyl, insbesondere C₁- und/oder C₂-Alkyl; C₆- bis C₁₅-Aryl, insbesondere C₆- bis C₁₀-Aryl; C₂- und/oder C₃-Olefin, insbesondere Vinyl; Amin, insbesondere C₃-C₈-alpha-Amin
- X =: Alkoxy, Insbesondere C₁- bis C₆-Alkoxy, besonders bevorzugt C₁- bis C₄- Alkoxy, ganz besonders bevorzugt C₁- und/oder C₂-Alkoxy; und
- n =: 2 oder 3.

Was nun den Anteil des Bindemittels an der Beschichtungszusammensetzung der ersten Schicht anbelangt, so hat es sich bewährt, wenn die Beschichtungszusammensetzung das Bindemittel in Mengen von 2 bis 60 Gew.-%, insbesondere 5 bis 50 Gew.-%, vorzugsweise 10 bis 40 Gew.-%, bevorzugt 15 bis 30 Gew.-%, bezogen auf die Beschichtungszusammensetzung, aufweist.

Darüber hinaus ist es üblicherweise vorgesehen, dass die Beschichtungszusammensetzung der ersten Schicht die Metallpartikel in Mengen von 40 bis 95 Gew.-%, insbesondere 50 bis 90 Gew.-%, vorzugsweise 60 bis 85 Gew.-%, bevorzugt 70 bis 80 Gew.-%, bezogen auf die Beschichtungszusammensetzung, aufweist. Bei den Metallpartikeln handelt es insbesondere um die zuvor beschriebenen plättchenförmigen bzw. kornförmigen, insbesondere sphärischen, Metallpartikel.

Gemäß einer bevorzugten Ausführungsform der vorliegenden Erfindung weist die Beschichtungszusammensetzung der ersten Schicht mindestens einen Vernetzer auf. Bei einem Vernetzer handelt es sich um eine insbesondere anorganische bzw. anorganisch basierte Verbindung, welche in die Matrix der ersten Schicht eingebaut wird und eine höhere Reaktionsgeschwindigkeit als das eigentliche Bindemittelsystem aufweist.

Wenn die Beschichtungszusammensetzung einen Vernetzer aufweist, so weist die Beschichtungszusammensetzung den Vernetzter üblicherweise in Mengen von 0,1 bis 10 Gew.-%, insbesondere 0,5 bis 5 Gew.-%, vorzugsweise 1 bis 3 Gew.-%, bevorzugt 1 bis 2 Gew.-%, bezogen auf die Beschichtungszusammensetzung, auf. Besonders gute Ergebnisse werden erhalten, wenn der Vernetzer ausgewählt ist aus der Gruppe von Silanen, Titanaten, Zirkonaten, metallorganischen Verbindungen, Säuren und Basen sowie deren Mischungen. Besonders bevorzugt wird es in diesem Zusammenhang, wenn der Vernetzer ausgewählt ist aus Titanaten, Zirkonaten, metallorganischen Verbindungen, Säuren und Basen sowie deren Mischungen, insbesondere Titanaten, Zirkonaten, metallorganische Verbindungen und deren Mischungen.

Wenn im Rahmen der vorliegenden Erfindung eine metallorganische Verbindung als Vernetzer verwendet wird, so hat es sich bewährt, wenn die metallorganische Verbindung ausgewählt ist aus metallorganischen Verbindungen, insbesondere Alkoxiden, des Bors, Aluminiums, Eisens, Zinks und Zinns sowie deren Mischungen.

Gleichermaßen werden sehr gute Ergebnisse erhalten, wenn die als Vernetzer eingesetzten Silane, Titanate und Zirkonate ausgewählt sind aus Diorganyldialkoxytitanaten, Diorganyldialkoxyzirkonaten, Organyltrialkoxysilanen, Organyltrialkoxytitanaten, Organyltrialykoxyzirkonaten, Tetraalkoxysilanen, Tetraalkoxytitanaten, Tetraalkoxyzirkonaten und deren Mischungen.

In diesem Zusammenhang ist es üblicherweise vorgesehen, dass die Organylsubstituenten ausgewählt sind Alkyl, Phenyl und Vinyl. Vorzugsweise sind die Organylsubstituenten ausgewählt aus Ethyl, Methyl, Phenyl und Vinyl. Besonders gute Ergebnisse werden erzielt, wenn die Vernetzer ausgewählt aus Tetrabutyltitanat, Titantetraisopropylat, Vinyltri-n-butyltitanat und deren Mischungen.

Gemäß einer bevorzugten Ausführungsform der vorliegenden Erfindung weist die Beschichtungszusammensetzung zur Herstellung einer kathodischen Korrosionsschutzbeschichtung, insbesondere die Beschichtungszusammensetzung der ersten Schicht,
(A) mindestens ein Bindemittel,
(B) Metallpartikel und
(C) mindestens einen Vernetzer, auf.

Im Rahmen der vorliegenden Erfindung ist es üblicherweise vorgesehen, dass die Beschichtungszusammensetzung der ersten Schicht insbesondere zumindest im Wesentlichen frei von Wasser ist, vorzugsweise frei von Wasser ist.

Darüber hinaus ist es erfindungsgemäß vorgesehen, dass die Beschichtungszusammensetzung der ersten Schicht mindestens ein Lösemittel aufweist.

Wenn die Beschichtungszusammensetzung der ersten Schicht ein Lösemittel aufweist, so hat es sich bewährt, wenn die Beschichtungszusammensetzung das Lösemittel in Mengen von weniger als 20 Gew.-%, insbesondere weniger als 15 Gew.-%, vorzugsweise weniger als 10 Gew.-%, bevorzugt weniger als 6 Gew.-%, bezogen auf die Beschichtungszusammensetzung, aufweist. Gleichermaßen kann es vorgesehen sein, dass die Beschichtungszusammensetzung das Lösemittel in Mengen von 1 bis 20 Gew.-%, insbesondere 2 bis 15 Gew.-%, vorzugsweise 3 bis 10 Gew.-%, bevorzugt 4 bis 6 Gew.-%, bezogen auf die Beschichtungszusammensetzung, aufweist.

Als Lösemittel, insbesondere organische Lösemittel können sämtliche organischen Lösemittel verwendet werden. Insbesondere geeignet sind aromatische und aliphatische Kohlenwasserstoffe sowie polare organische Lösemittel, wie beispielsweise Aceton, Alkohole, insbesondere C₁ bis C₂₀ Alkohole, vorzugsweise C₂ bis C₁₀ Alkohole, besonders bevorzugt C₂ bis C₈ Alkohole, Nitrile oder Nitroverbindungen. Um ein möglichst schnelles Aushärten der Beschichtungszusammensetzung zu gewährleisten, weisen die Lösemittel üblicherweise einen Siedepunkt von weniger als 120 °C, insbesondere weniger als 100 °C, auf.

Gemäß einer wiederrum bevorzugten Ausführungsform der vorliegenden Erfindung weist das Beschichtungsmittel zur Herstellung einer kathodischen Korrosionsschutzbeschichtung, insbesondere der ersten Schicht, somit
(A) mindestens ein Bindemittel,
(B) Metallpartikel,
(C) mindestens einen Vernetzer und
(D) mindestens ein Lösemittel auf.

Darüber hinaus kann es im Rahmen der vorliegenden Erfindung gleichfalls vorgesehen sein, dass die Beschichtungszusammensetzung mindestens einen Verdicker und/oder ein Rheologieadditiv aufweist.

Falls die Beschichtungszusammensetzung einen Verdicker und/oder ein Rheologieadditiv aufweist, so ist es üblicherweise vorgesehen, dass die Beschichtungszusammensetzung den Verdicker und/oder das Rheologieadditiv in Mengen von 0,01 bis 5 Gew.-%, insbesondere 0,05 bis 3 Gew.-%, vorzugsweise 0,1 bis 2 Gew.-%, bezogen auf die Beschichtungszusammensetzung, aufweist. Bei den Verdickern bzw. Rheologieadditiven kann es sich beispielsweise um Ethylcellulose oder Kieselsäure, insbesondere pyrogene Kieselsäure, handeln.

Gemäß einer bevorzugten Ausführungsform der vorliegenden Erfindung wird das Rheologieadditiv bzw. der Vernetzer als Komponente (E) der Beschichtungszusammensetzung verwendet.

Darüber hinaus kann es im Rahmen der vorliegenden Erfindung vorgesehen sein, dass die Beschichtungszusammensetzung mindestens ein Netzmittel aufweist. Wenn im Rahmen der vorliegenden Erfindung die Beschichtungszusammensetzung ein Netzmittel aufweist, so hat es sich bewährt, wenn die Beschichtungszusammensetzung das Netzmittel in Mengen von 0,01 bis 5 Gew.-%, insbesondere 0,05 bis 3 Gew.-%, vorzugsweise 0,1 bis 2 Gew.-%, bezogen auf die Beschichtungszusammensetzung, aufweist.

Wenn im Rahmen der vorliegenden Erfindung die Beschichtungszusammensetzung ein Netzmittel aufweist, so wird diese bevorzugt als Komponente (F) des Beschichtungsmittel verwendet.

Im Rahmen der vorliegenden Erfindung ist es somit bevorzugt, wenn die Beschichtungszusammensetzung zur Herstellung einer kathodischen Korrosionsschutzbeschichtung, insbesondere der ersten Schicht,
(A) mindestens ein Bindemittel,
(B) Metallpartikel,
(C) mindestens einen Vernetzer,
(D) Lösemittel,
(E) mindestens ein Rheologieadditiv und/oder einen Verdicker und
(F) mindestens ein Netzmittel
aufweist.

Darüber hinaus kann es im Rahmen der vorliegenden Erfindung gleichfalls vorgesehen sein, dass die Beschichtungszusammensetzung der ersten Schicht weitere Additive insbesondere ausgewählt aus der Gruppe von Konservierungsmitteln, Stabilisatoren, Säuren und/oder Basen, entschäumenden Komponenten, Filmbildnern, Verlaufsmitteln, Füllstoffen, pH-Stabilisatoren und pH-Einstellmitteln, aufweist.

Wenn die Beschichtungszusammensetzung weitere Additive aufweist, so enthält die Beschichtungszusammensetzung weitere Additive in üblicherweise in Mengen von 0,01 bis 5 Gew.-%, insbesondere 0,05 bis 3 Gew.-%, vorzugsweise 0,1 bis 2 Gew.-%, bezogen auf die Beschichtungszusammensetzung. Alle weiteren Additive werden insbesondere als Komponente (G) die Beschichtungszusammensetzung verwendet.

Im Rahmen der vorliegenden Erfindung werden besonders gute Ergebnisse erhalten, wenn die Beschichtungszusammensetzung der ersten Schicht eine dynamische Viskosität bei 20 °C nach Brookfield im Bereich von 2 bis 10.000 mPas, insbesondere 5 bis 1.000 mPas, vorzugsweise 5 bis 500 mPas, bevorzugt 10 bis 100 mPas, besonders bevorzugt 30 bis 50mPas, aufweist. Die Beschichtungszusammensetzung der ersten Schicht, insbesondere der kathodischen Korrosionsschutzbeschichtung, kann somit durch sämtliche geeignete Auftragsverfahren, insbesondere auch durch Sprühen, Walzen, Rakeln, Tauchen, insbesondere Tauchschleudern, auf das Substrat aufgebracht werden. Bevorzugt wird die Beschichtungszusammensetzung jedoch mittels Sprühen aufgebracht.

Was nun die Schichtdicke anbelangt, mit welcher die Beschichtungszusammensetzung der ersten Schicht auf das Substrat aufgebracht wird, so hat es sich bewährt, wenn die Beschichtungszusammensetzung der ersten Schicht mit einer Schichtdicke von 0,5 bis 50 µm, insbesondere 1 bis 40 µm, vorzugsweise 3 bis 28 µm, bevorzugt 5 bis 20 µm, besonders bevorzugt 7 bis 15 µm, aufgebracht wird, insbesondere auf das Substrat aufgebracht wird.

Was nun die zweite Schicht des erfindungsgemäßen Beschichtungssystems anbelangt, so hat es sich bewährt, wenn die zweite Schicht aus einer Beschichtungszusammensetzung, insbesondere einer Deckschichtzusammensetzung bzw. TopCoat-Zusammensetzung, aufweisend
(A) mindestens eine hydrophile anorganische oder organische polymere Verbindung oder eine hydrophobe organische Verbindung und
(B) Wasser,
erhalten wird.

Wie zuvor bereits ausgeführt, wird es im Rahmen der vorliegenden Erfindung besonders bevorzugt, wenn die Beschichtungszusammensetzung der zweiten Schicht, insbesondere die Deckschichtzusammensetzung, hydrophile anorganische oder organische polymere Verbindungen aufweist. Besonders bevorzugt ist es in diesem Zusammenhang, wenn die hydrophilen anorganischen oder organischen polymeren Verbindungen nicht nur hydrophil, d.h. polar sind, sondern darüber hinaus auch ionische Anteile aufweisen, da auf diese Weise die Korrosionsschutzwirkung insbesondere von Zinklamellenprimern, deutlich verbessert werden kann.

Die Verwendung von hydrophoben organischen Verbindungen in wässrigen Dispersionen dient hingegen allein der Aushärtung der Beschichtungszusammensetzung der ersten Schicht, insbesondere der kathodischen Korrosionsschutzzusammensetzung, wobei die hydrophobe organische Verbindung, welche auf der ersten Schicht sowie gegebenenfalls auf dem Substrat zurückbleibt, eine gewisse Passivierung der Oberfläche, auf welche sie aufgetragen ist, ermöglicht. Die hydrophoben organischen Verbindungen werden in diesem Zusammenhang vorzugsweise mit Hilfe von Emulgatoren dispergiert oder es werden selbstemulgierende Systeme eingesetzt.

Üblicherweise ist es vorgesehen, dass die Beschichtungszusammensetzung der zweiten Schicht, d.h. die Deckschichtzusammensetzung, die hydrophile anorganische oder organische polymere Verbindung oder die hydrophobe organische Verbindung in Mengen von 3 bis 50 Gew.-%, insbesondere 5 bis 40 Gew.-%, vorzugsweise 10 bis 30 Gew.-%, bevorzugt 15 bis 25 Gew.-%, bezogen auf die Beschichtungszusammensetzung, enthält. In diesem Zusammenhang können insbesondere auch Mischungen der zuvor definierten hydrophilen anorganischen oder organischen polymeren Verbindungen oder hydrophoben organischen Verbindungen eingesetzt werden.

Gleichermaßen kann es im Rahmen der vorliegenden Erfindung vorgesehen sein, dass die Beschichtungszusammensetzung zur Erzeugung der zweiten Schicht insbesondere die Deckschichtzusammensetzung, Wasser in Mengen von 50 bis 97 Gew.-%, insbesondere 60 bis 95 Gew.-%, vorzugsweise 70 bis 90 Gew.-%, bevorzugt 75 bis 85 Gew.-%, bezogen auf die Beschichtungszusammensetzung, enthält.

Darüber hinaus kann es im Rahmen der vorliegenden Erfindung vorgesehen sein, dass die Beschichtungszusammensetzung zur Erzeugung der zweiten Schicht, insbesondere Deckschichtzusammensetzung, weitere ionische Bestandteile aufweist. Unter ionischen Bestandteilen sind im Rahmen der vorliegenden Erfindung Verbindungen oder Teile von Verbindungen zu verstehen, welche bei Kontakt mit Wasser in ionische Verbindung dissoziieren. Als Beispiel seien anorganische oder organische Säuren und Salze genannt. Besonders bevorzugt werden - wie zuvor bereits ausgeführt - Verbindungen eingesetzt, die auch in Zusammensetzungen für Konversionsbehandlungen eingesetzt werden, insbesondere Hexafluortitansäure, Hexafluorzirkonsäure, Phosphonsäure und/oder Phosphorsäure.

Die ionischen Bestandteile werden insbesondere bei Verwendung von organischen Beschichtungen in die Beschichtungszusammensetzung der zweiten Schicht eingebracht und aktivieren die kathodische Korrosionsschutzbeschichtung, insbesondere Zinklamellen-Primern, da bei Kontakt mit Wasser Elektrolytlösungen erzeugt werden und somit elektrische Leitfähigkeit gegeben ist. Bevorzugt wird es jedoch, wenn das Polymer ionische Gruppen aufweist.

Wenn die Beschichtungszusammensetzung der zweiten Schicht, insbesondere die Deckschichtzusammensetzung, zusätzliche ionische Bestandteile enthält, so enthält die Beschichtungszusammensetzung die ionischen Bestanteile in Mengen von 0,01 bis 10 Gew.-%, insbesondere 0,1 bis 5 Gew.-%, vorzugsweise 0,2 bis 2 Gew.-%, bevorzugt 0,5 bis 1 Gew.-%, bezogen auf das Beschichtungszusammensetzung.

Darüber hinaus kann es weiterhin vorgesehen sein, dass die Beschichtungszusammensetzung der zweiten Schicht Additive aufweist. Falls die Beschichtungszusammensetzung der zweiten Schicht, insbesondere die Deckschichtzusammensetzung, Additive aufweist, so hat es sich bewährt, wenn die Beschichtungszusammensetzung die Additive in Mengen von 0,01 bis 10 Gew.-%, insbesondere 0,05 bis 5 Gew.-%, vorzugsweise 0,1 bis 2 Gew.-%, bezogen auf die Beschichtungszusammensetzung, aufweist.

Was nun die Art der Additive anbelangt, so können sämtliche geeignete Additive eingesetzt werden. Üblicherweise sind die Additive jedoch ausgewählt aus der Gruppe von Rheologieadditiven, Konservierungsmitteln, Stabilisatoren, Säuren und/oder Basen, Tensiden, entschäumenden Komponenten, Filmbildnern, organischen UV-Absorbern, biogenen Wirkstoffen, Verlaufsmitteln, Netzmitteln, Füllstoffen, pH-Stabilisatoren und pH-Einstellmitteln.

Was nun die Viskosität der Beschichtungszusammensetzung zur Erzeugung der zweiten Schicht, insbesondere der Deckschichtzusammensetzung, anbelangt, so kann diese in weiten Bereichen variieren. Üblicherweise weist die Beschichtungszusammensetzung eine dynamische Viskosität bei 20 °C nach Brookfield im Bereich von 2 bis 5.000 mPas, insbesondere 5 bis 1.000 mPas, vorzugsweise 5 bis 500 mPas, bevorzugt 10 bis 100 mPas, besonders bevorzugt 30 bis 50mPas, auf. Die Viskosität der Beschichtungszusammensetzung der zweiten Schicht, insbesondere der Deckschichtzusammensetzung, ist vorzugsweise derart ausgebildet, dass die Beschichtungszusammensetzung problemlos durch Sprühauftrag aufgetragen und insbesondere fein zerstäubt werden kann. Durch eine feine Zerstäubung wird ein hoher Anteil aus mikroskopisch kleinen Tröpfchen erzeugt, welche zu einer beschleunigten Aushärtung der ersten Schicht des erfindungsgemäßen Beschichtungssystems führen.

Gemäß einer bevorzugten Ausführungsform der vorliegenden Erfindung weist die Beschichtungszusammensetzung der zweiten Schicht, insbesondere die Deckschichtzusammensetzung, einen pH-Wert im sauren oder im alkalischen Bereich auf. Besonders gute Ergebnisse werden in diesem Zusammenhang erhalten, wenn die Beschichtungszusammensetzung einen pH-Wert von kleiner 6,5, insbesondere kleiner 6, vorzugsweise kleiner 5, oder einen pH-Wert größer 7,5, bevorzugt größer 8, bevorzugt größer 10, aufweist. Gleichermaßen kann es vorgesehen sein, dass die Beschichtungszusammensetzung einen pH-Wert im Bereich von 0,5 bis 6,5, insbesondere 1 bis 6, vorzugsweise 2 bis 5, oder einen pH-Wert im Bereich von 7,5 bis 13,5, insbesondere 8 bis 13, vorzugweise 10 bis 12 aufweist. Durch einen pH-Wert im sauren oder alkalischen Bereich können insbesondere auch die in der Oberfläche der ersten Schicht eingebetteten Metallpartikel angeätzt und somit aktiviert werden. Darüber hinaus wird amphoteres Zinkoxid angelöst und die Ausbildung von Konversionsschichten gefördert. Dies führt zu einer deutlich verbesserten Korrosionsschutzbeschichtung.

Was nun die Schichtdicke anbelangt, mit welcher die Beschichtungszusammensetzung der zweiten Schicht, insbesondere die Deckschichtzusammensetzung, aufgebracht wird, so kann dies in weiten Bereichen variieren. Üblicherweise ist es jedoch vorgesehen, dass die Beschichtungszusammensetzung der zweiten Schicht mit einer geringeren Schichtdicke als die Beschichtungszusammensetzung der ersten Schicht aufgebracht wird.

Im Allgemeinen wird die Beschichtungszusammensetzung der zweiten Schicht mit einer Schichtdicke von 0,5 bis 15 µm, insbesondere 0,5 bis 10 µm, vorzugsweise 1 bis 6 µm, bevorzugt 2 bis 5 µm, besonders bevorzugt 2 bis 4 µm, aufgebracht, insbesondere auf die erste Schicht und/oder das Substrat aufgebracht.

Es zeigt
- Fig. 1: eine schematische Darstellung des erfindungsgemäßen Beschichtungssystems, welches auf ein Substrat aufgebracht ist, und
- Fig. 2: eine schematische Darstellung eines erfindungsgemäßen Beschichtungssystems, welches auf ein Substrat aufgebracht ist, wobei die erste Schicht nur Teile des Substrates bedeckt und die zweite Schicht sowohl das Substrat als auch die erste Schicht bedeckt.

Weiterer Gegenstand der vorliegenden Erfindung - gemäß einem **zweiten** Aspekt der vorliegenden Erfindung - ist ein Verfahren zur Herstellung eines Beschichtungssystems, insbesondere eines Korrosionsschutzbeschichtungssystems, wie zuvor beschrieben, zur Erzeugung eines kathodischen Korrosionsschutzes auf einem metallischen Substrat, wobei,
(A) in einem ersten Verfahrensschritt eine erste insbesondere zumindest im Wesentlichen wasserfreie und unter Einwirkung von Wasser vernetzende Beschichtungszusammensetzung, insbesondere zur Erzeugung einer kathodischen Korrosionsschutzbeschichtung, auf ein metallisches Substrat aufgebracht wird, so dass eine erste Schicht gebildet wird, und auf Temperaturen von weniger als 100 °C erwärmt wird und
(B) in einem auf den ersten Verfahrensschritt (A) folgenden zweiten Verfahrensschritt eine wässrig basierte zweite Beschichtungszusammensetzung auf die erste Schicht aufgebracht wird, wobei die zweite Schicht (4) mindestens eine hydrophile anorganische oder organische polymere Verbindung enthält, wobei die anorganische oder organische polymere Verbindung ionische Anteile aufweist und/oder die Beschichtungszusammensetzung zusätzlich ionische Bestandteile in Mengen von 0,1 bis 5 Gew.-%, bezogen auf die Beschichtungszusammensetzung, enthält, wobei nach Aufbringung der zweiten Beschichtungszusammensetzung die erste Beschichtungszusammensetzung unter Einwirkung von Feuchtigkeit vernetzt wird.

Im Rahmen der vorliegenden Erfindung ist es insbesondere vorgesehen, dass im zweiten Verfahrensschritt (B) die wässrig basierte zweite Beschichtungszusammensetzung, insbesondere die zuvor beschriebene Deckschichtzusammensetzung, auf die erste Schicht, insbesondere die zuvor beschriebene Korrosionsschutzbeschichtungszusammensetzung, aufgebracht wird. Die Beschichtungszusammensetzungen für die erste oder die zweite Schicht entsprechen den im Zusammenhang mit dem erfindungsgemäßen Beschichtungssystem beschriebenen Beschichtungszusammensetzungen.

Im Rahmen der vorliegenden Erfindung ist es darüber hinaus gleichermaßen vorzugsweise vorgesehen, dass die erste Beschichtungszusammensetzung in Verfahrensschritt (A) unmittelbar auf ein metallisches Substrat aufgebracht wird, insbesondere zumindest partiell, d.h. lokal begrenzt, aufgebracht wird. Es kann jedoch gemäß einer besonderen Ausführungsform der vorliegenden Erfindung vorgesehen sein, dass das metallische Substrat zuvor einer Konversionsbehandlung unterzogen wurde, d.h. mit einer Konversionsschicht beschichtet ist. In diesem Fall wird die erste Schicht des erfindungsgemäßen Beschichtungssystems auf die Konversionsschicht aufgebracht.

Wie zuvor gleichfalls im Zusammenhang mit dem erfindungsgemäßen Beschichtungssystem bereits ausgeführt, kann es darüber hinaus vorgesehen sein, dass in Verfahrensschritt (B) die zweite Schicht, insbesondere die zweite Beschichtungszusammensetzung, nicht allein auf die erste Schicht, d.h. die in Verfahrensschritt (A) aufgebrachte Schicht, aufgetragen wird, sondern gegebenenfalls auch auf Teile des Substrates, auf welche die Beschichtungszusammensetzung zur Erzeugung einer kathodischen Korrosionsschutzbeschichtung, d.h. der ersten Schicht, nicht aufgebracht wurde.

Was nun den Auftrag der ersten Beschichtungszusammensetzung der ersten Beschichtungszusammensetzung der ersten Schicht anbelangt, so erfolgt dieser üblicherweise durch Rollen, Walzen, Rakeln, Tauchen, Tauchschleudern, Pinseln, Sprühen. Besonders bevorzugt wird es in diesem Zusammenhang, wenn die erste Beschichtungszusammensetzung durch Tauchen, Tauchschleudern oder Sprühen, vorzugsweise Sprühen, aufgebracht wird. Besonders gute Ergebnisse werden in diesem Zusammenhang erhalten, wenn die erste Beschichtungszusammensetzung mit den im Zusammenhang mit dem ersten Erfindungsaspekt beschriebenen Schichtdicken auf das Substrat aufgebracht wird.

Gemäß der vorliegenden Erfindung wird in Verfahrensschritt (A) nach Aufbringung der ersten Beschichtungszusammensetzung die erste Beschichtungszusammensetzung auf Temperaturen von weniger als 100 °C, insbesondere weniger als 90 °C, vorzugsweise weniger als 80 °C, erwärmt. Gleichermaßen kann es vorgesehen sein, dass in Verfahrensschritt (A) nach Aufbringung der ersten Beschichtungszusammensetzung die erste Beschichtungszusammensetzung auf Temperaturen von 20 bis 100 °C, insbesondere 30 bis 90 °C, vorzugsweise 50 bis 80 °C, erwärmt wird.

Im Rahmen der vorliegenden Erfindung ist es möglich und wird gemäß einer besonderen Ausführungsform der vorliegenden Erfindung auch bevorzugt, wenn die erste Beschichtungszusammensetzung im Temperaturbereich zwischen 5 und 30 °C aushärtet bzw. vernetzt wird. Dies Ausführungsform ist insbesondere für die mobile Anwendung des erfindungsgemäßen Beschichtungssystems besonders vorteilhaft.

Durch eine Erwärmung des Substrats und der ersten Beschichtungszusammensetzung auf Temperaturen von weniger als 100 °C werden jedoch beispielweise Lösemittelanteile, welche zur Einstellung der Viskosität in der Beschichtungszusammensetzung enthalten sind, entfernt und die Vernetzung der ersten Beschichtungszusammensetzung wird bereits initiiert. Bei Auftrag der zweiten Beschichtungszusammensetzung auf die dann erwärmte erste Beschichtungszusammensetzung ist zum einen die Vernetzungsgeschwindigkeit der ersten Beschichtungszusammensetzung deutlich erhöht und zum anderen verdampft auch das in der zweiten Beschichtungszusammensetzung enthaltene Wasser - insbesondere überschüssiges Wasser, welches nicht zur Aushärtung der ersten Beschichtungszusammensetzung benötigt wird - unmittelbar und muss nicht erst entfernt werden. Zusätzlich wird in unmittelbarer Nähe zur Beschichtungsoberfläche eine hohe Luftfeuchtigkeit eingestellt, welche eine schnelle Aushärtung bzw. Vernetzung der ersten Schicht fördert. Eine Erwärmung der ersten Beschichtungszusammensetzung und/oder des Substrates resultiert somit in einer prozesstechnischen Vereinfachung des erfindungsgemäßen Verfahrens, insbesondere kann die Trocknungszeit, d.h. die Zeit zur Aushärtung bzw. Vernetzung der ersten und der zweiten Beschichtungszusammensetzung deutlich reduziert werden, wodurch Lagerkapazitäten eingespart werden können.

Was nun die Aufbringung der zweiten Beschichtungszusammensetzung anbelangt, so kann diese durch jegliche geeignete Methode auf die erste Schicht und/oder das Substrat aufgebracht werden. Üblicherweise wird die zweite Beschichtungszusammensetzung durch Rollen, Walzen, Rakeln, Tauchen, Tauchschleudern, Pinseln oder Sprühen auf die erste Schicht und/oder das Substrat aufgebracht. Besonders bevorzugt wurde es im Rahmen der vorliegenden Erfindung jedoch, wenn die zweite Beschichtungszusammensetzung durch Sprühen aufgebracht wird, insbesondere auf die erste Schicht und/oder das Substrat. Durch einen Sprühauftrag der zweiten Beschichtungszusammensetzung werden fein verteilte Wassertröpfchen und Wasserdampf erzeugt, welcher zu einer besonders raschen Aushärtung bzw. Vernetzung der ersten Beschichtungszusammensetzung führt.

Die zweite Beschichtungszusammensetzung wird insbesondere mit dem zuvor genannten Schichtdicken auf die erste Schicht bzw. das Substrat aufgebracht.

Im Allgemeinen ist es im Rahmen der vorliegenden Erfindung vorgesehen, dass im Verfahrensschritt (B) nach Aufbringung der zweiten Beschichtungszusammensetzung die erste Beschichtungszusammensetzung unter Einwirkung von Wasser, insbesondere Feuchtigkeit, vorzugsweise Luftfeuchtigkeit, vernetzt wird. Die Besonderheit des erfindungsgemäßen Verfahrens ist unter anderem darin zu sehen, dass durch die Verwendung einer zweiten wässrigen Beschichtungszusammensetzung die Feuchtigkeit zur Vernetzung der ersten Beschichtungszusammensetzung durch das Beschichtungssystem selber gestellt wird und nicht beispielsweise das beschichtete Substrat zur Aushärtung in speziell klimatisierten Räumen aufbewahrt werden muss.

Für weitere Einzelheiten zu diesem Erfindungsaspekt kann auf die obigen Ausführungen zu dem ersten Erfindungsaspekt verwiesen werden, welche in Bezug auf das erfindungsgemäße Verfahren entsprechend gelten.

Wiederrum weiterer Gegenstand der vorliegenden Erfindung - gemäß einem **dritten** Aspekt der vorliegenden Erfindung, ist ein metallischen Substrat, aufweisend ein zuvor beschriebenes Beschichtungssystem.

Für weitergehende Einzelheiten zu diesem Erfindungsaspekt kann auf die obigen Ausführungen zu den übrigen Erfindungsaspekten verwiesen werden, welche in Bezug auf das erfindungsgemäße metallische Substrat entsprechend gelten.

Schließlich ist wiederrum weiterer Gegenstand - gemäß einem **vierten** Aspekt der vorliegenden Erfindung - ein Kit zur Herstellung eines zuvor beschriebenen Beschichtungssystems, umfassend eine erste Beschichtungszusammensetzung, insbesondere eine kathodische Korrosionsschutzbeschichtungszusammensetzung, wie zuvor beschrieben, und eine zweite Beschichtungszusammensetzung, insbesondere eine Deckschichtzusammensetzung, wie zuvor beschrieben.

Für weitergehende Einzelheiten zu diesem Erfindungsaspekt kann auf die obigen Ausführungen zu den übrigen Erfindungsaspekten verwiesen werden, welche in Bezug auf das erfindungsgemäße Kit entsprechend gelten.

Der Gegenstand der vorliegenden Erfindung wird nachfolgend anhand der Figurenbeschreibung sowie der Ausführungsbeispiele in nicht beschränkender Weise beispielhaft anhand bevorzugter Ausführungsformen erläutert.

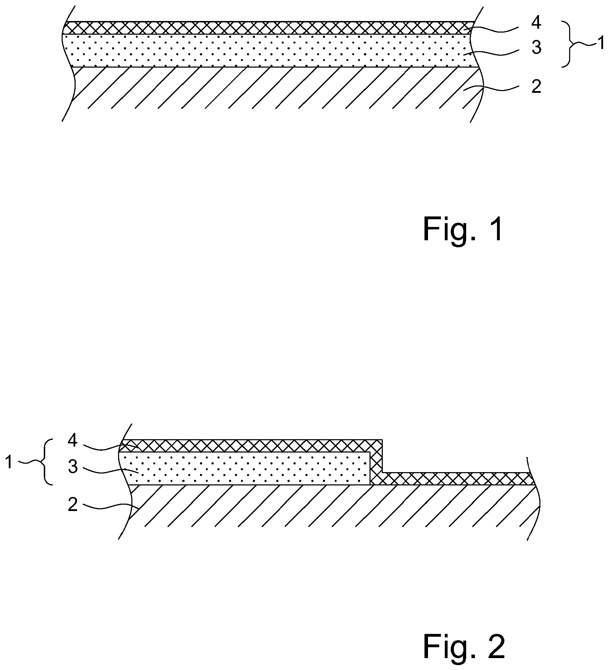

Es zeigen die Figurendarstellungen gemäß Fig. 1 ein erfindungsgemäßes Beschichtungssystem 1, welches auf ein metallisches Substrat 2 aufgebracht ist. Das Beschichtungssystem 1 weist eine erste Schicht 3 auf, welche unmittelbar auf das Substrat aufgebracht ist und eine zweite Schicht 4, welche auf die erste Schicht aufgebracht ist.

Die erste Schicht 3 wird vorzugsweise aus einer wasserfreien, Metallplättchen enthaltenden Beschichtungszusammensetzung, insbesondere einem Zinklamellenprimer, erhalten und liegt in Form einer anorganischen Matrix mit darin eingebetteten Metallplättchen, vorzugsweise Zinklamellen, vor.

Die zweite Schicht 4 besteht bevorzugt aus einem kationisch stabilisierten polymeren Bindemittel auf Basis von Polyurethanen und Polyacrylaten und wird vorzugsweise aus einer wässrigen Dispersion des polymeren Bindemittels, welche einen pH-Wert im sauren oder alkalischen Bereich aufweist, erhalten. Durch die Verwendung eines kationisch stabilisierten polymeren Bindemittels in Schicht 4 werden die Metallpartikel in der Schicht 3 bzw. für den Korrosionsschutz zugänglich, wodurch der Korrosionsschutz des Beschichtungssystems 1 erhöht wird.

Fig. 2 zeigt eine besondere Ausführungsform des erfindungsgemäßen Beschichtungssystems 1, welches auf ein metallisches Substrat 2 aufgebracht ist. Das Beschichtungssystem 1 weist einen zweischichtigen Aufbau auf, wobei eine erste Schicht 3 auf Teile des Substrates 2 aufgebracht ist und dieses zumindest teilweise bedeckt.

Die zweite Schicht 4 besitzt eine größere Ausdehnung als die erste Schicht 3 und ist sowohl auf die erste Schicht 3 als auch das Substrat 2 aufgebracht. Die erste Schicht 3 und die zweite Schicht 4 entsprechen darüber hinaus den zuvor beschriebenen Schichten. Die zweite Schicht 4, welche aus einer wässrigen Beschichtungszusammensetzung erhalten wird, ermöglicht eine schnelle Aushärtung der ersten Schicht 3, bietet darüber hinaus jedoch auch einen verbesserten Korrosionsschutz, welcher nicht auf einer kathodischen Korrosionschutzwirkung beruht, für das Substrat 2, an den Stellen, an welchen die erste Schicht 1 nicht aufgetragen ist.

Diese Ausführungsform wird insbesondere dann verwendet, wenn das Substrat aus Kompositmaterialien besteht und beispielsweise Holz- oder Kunststoffkomponenten aufweist. Darüber hinaus wird diese Ausführungsform auch auf einer Vielzahl von Gussteilen angewendet, bei welchen kein vollflächiger kathodischer Korrosionsschutz gewährleistet werden muss, wie beispielsweise bei Radnaben oder Bremsschreiben.

Der Gegenstand der vorliegenden Erfindung wird nachfolgend anhand der Ausführungsbeispiele weiter in nicht beschränkender Weise verdeutlicht.

### Ausführungsbeispiele

### 1. Beschichtete Stahlbleche

Die Leistungsfähigkeit des erfindungsgemäßen Beschichtungssystems wird nachfolgend anhand von beschichteten Stahlblechen erläutert.

Hierzu werden DCO4 Stahlbleche alkalisch bei 60 °C mit dem Reiniger C72 der Henkel AG & Co. KGaA entfettet und nach Spülen und Trocknen mit jeweils einem Zinklamellenprimer - nachfolgend auch Basecoat genannt - beschichtet. Die verwendeten Basecoat-Formulierungen 1 bis 14 sind in den Tabellen 2 bis 5 angegeben.

Der Zinklamellenprimer wird mit einer Schichtdicke von ca. 15 µm mittels Spritzauftrag auf das Stahlblech aufgebracht und anschließend 30 Minuten bei 70 °C getrocknet.

Anschließend wird jeweils eine der wässrigen Topcoat-Formulierungen A bis J auf die mit den Zinklamellenprimern beschichteten Stahlbleche mittels Spritzauftrag aufgetragen, es resultiert eine Trockenfilm-schichtdicke von ca. 3 µm. Die Topcoat-Formulierungen A bis J sind in den Tabelle 6 bis 8 angegeben.

Die für die Base- und Topcoats verwendeten Materialien sind in Tabelle 1 angegeben.

**Tabelle 1: Verwendete Materialien**

| Material | Spezifizierung |
|---|---|
| Polysiloxansystem | Silanolterminiertes Polydimethylsiloxan DMS-S12 von Gelest Inc. |
| Vernetzer | Tetra-n-butyltitanat, Aminosilane |
| Zinkstaub | Umicore Metalle & Oberflächen GmbH |
| Zinklamelle | 4ZnAl7 von Eckart GmbH |
| Lösemittel | Solvesso 100, n-Butanol |
| Netzmittel | DISPERBYK-190 von BYK-Chemie GmbH |
| Verdicker | M-P-A 4020 X⁵ von Elementis Specialties |
| Na-Wasserglas¹ | 37/40 von BASF SE |
| K-Wasserglas¹ | 28/30 von BASF SE |
| Li-Wasserglas¹ | Li-Polysilikat von Sigma Aldrich |
| Ention. Wasser¹ | Entionisiertes Wasser |
| Wachs / Fettsäure¹ | PE-Wachse Aquacer von BYK-Chemie GmbH / Stearinsäure |
| Polym. Bindemittel¹ | wässrige PU-Dispersion, 50 Gew.-% Feststoffanteil |
| Polyacrylsäure¹ | wasserlösliche Polyacrylsäuren M_{w} 2000 -10000 |
| Silikasol¹ | Levasil-Typen von AkzoNobel |
| Silanhydrolysat¹ | Hydrolsi 2776 von Evonik Industries AG |

Die beschichteten Stahlbleche werden anschließend verschiedenen Tests unterzogen, nämlich einem Abriebtest mittels Papiertuch, einem Tesa-Abrisstest, einem Salzsprühtest am Ritz (Ritz bis auf Stahl, 0,5 mm Ritzbreite) bis zum Auftreten von Rotrost sowie einem Kondensklimatest am Ritz bis zum Auftreten von Rotrost. Die Ergebnisse sind in den Tabellen 9 bis 12 wiedergegeben. Als Vergleich werden jeweils ein Beispiel ohne Topcoat-Beschichtung sowie mit einem Topcoat auf Basis eines lösemittelbasierten Epoxidharzlackes durchgeführt.

**Tabelle 2: Basecoat-Formulierungen**

| Formulierung | 1 | 2 | 3 | 4 |
|---|---|---|---|---|
| Bindemittel¹ Polysiloxansystem | 36,5 | 36,5 | 29 | 28 |
| Vernetzer¹ | 1,5 | 1,5 | 1,0 | 1,0 |
| Zinkstaub¹ | 60 | 60 | 70 | 70 |
| Zinklamelle¹ | 2 | 2 | - | 1 |
| Lösemittel¹ | - | - | - | - |
| Netzmittel¹ | - | - | - | - |
| Verdicker¹ | - | - | - | - |

| | | | | |
|---|---|---|---|---|
| ¹: Angaben in Gew.-% | | | | |

**Tabelle 3: Basecoat-Formulierungen**

| Formulierung | 5 | 6 | 7 | 8 |
|---|---|---|---|---|
| Bindemittel¹ Polysiloxansystem | 10 | 15 | 14 | 10 |
| Vernetzer¹ | 5 | 1,5 | 1,4 | 0,8 |
| Zinkstaub¹ | 83 | 81,5 | 77 | 88,5 |
| Zinklamelle¹ | 2 | 2 | 2 | 0,7 |
| Lösemittel¹ | - | - | 5,6 | - |
| Netzmittel¹ | - | - | - | - |
| Verdicker¹ | - | - | - | - |

| | | | | |
|---|---|---|---|---|
| ¹: Angaben in Gew.-% | | | | |

**Tabelle 4: Basecoat-Formulierungen**

| Formulierung | 9 | 10 | 11 | 12 |
|---|---|---|---|---|
| Bindemittel Titanat | 20,8 | 31 | 17,5 | 21,0 |
| Vernetzer | - | - | - | - |
| Zinkstaub | 56,3 | - | 54,7 | 62,6 |
| Zinklamelle | - | 52,6 | - | 3,6 |
| Lösemittel | 21,15 | 15,7 | 25,5 | 11 |
| Netzmittel | 1,0 | 0,2 | 0,9 | 1,8 |
| Verdicker | 0,75 | 0,5 | 1,4 | - |

| | | | | |
|---|---|---|---|---|
| ¹: Angaben in Gew.-% | | | | |

**Tabelle 5: Basecoat-Formulierungen**

| Formulierung | 13 | 14 |
|---|---|---|
| Bindemittel¹ Polysiloxansystem | 21,8 | 22,5 |
| Vernetzer¹ | - | - |
| Zinkstaub¹ | - | - |
| Zinklamelle¹ | 51,3 | 63,2 |
| Lösemittel¹ | 24,1 | 10,8 |
| Netzmittel¹ | 1,4 | 1,5 |
| Verdicker¹ | 1,4 | 2 |

| | | |
|---|---|---|
| ¹: Angaben in Gew.-% | | |

**Tabelle 6: Topcoat-Formulierungen**

| Formulierung | A | B | C | D |
|---|---|---|---|---|
| Na-Wasserglas¹ | - | - | - | 10 |
| K-Wasserglas¹ | - | - | 10 | - |
| Li-Wasserglas¹ | 10 | 10 | - | - |
| Wasser (entionisiert) ¹ | 75 | 90 | 90 | 90 |
| Wachs/ Fettsäure¹ | - | - | - | - |
| Polym. Bindemittel¹ | - | - | - | - |
| Polyacrylsäure¹ | - | - | - | - |
| Silikasol¹ | - | - | - | - |
| Silanhydrolysat¹ | 15 | - | - | - |

| | | | | |
|---|---|---|---|---|
| ¹: Angaben in Gew.-% | | | | |

**Tabelle 7: Topcoat-Formulierungen**

| Formulierung | E | F | G | H |
|---|---|---|---|---|
| Na-Wasserglas¹ | - | 9,5 | - | - |
| K-Wasserglas¹ | 6 | - | - | - |
| Li-Wasserglas¹ | - | - | - | - |
| Ention. Wasser¹ | 68,5 | 76,5 | 80 | 79,9 |
| Wachs/ Fettsäure¹ | 4 | 2 | 20 | 20 |
| Polym. Bindemittel¹ | 12,5 | - | - | - |
| Polyacrylsäure¹ | - | - | - | 0,1 |
| Silikasol¹ | - | - | - | - |
| Silanhydrolysat¹ | 9 | 12 | - | - |

| | | | | |
|---|---|---|---|---|
| ¹: Angaben in Gew.-% | | | | |

**Tabelle 8: Topcoat-Formulierungen**

| Formulierung | I | J |
|---|---|---|
| Na-Wasserglas¹ | - | - |
| K-Wasserglas¹ | - | - |
| Li-Wasserglas¹ | - | - |
| Ention. Wasser¹ | 80 | 77.5 |
| Wachs/ Fettsäure¹ | - | - |
| Polym. Bindemittel¹ | 20 | 20 |
| Polyacrylsäure¹ | - | - |
| Silikasol¹ | - | 2.5 |
| Silanhydrolysat¹ | - | - |

| | | |
|---|---|---|
| ¹: Angaben in Gew.-% | | |

In den Tabellen 9 bis 12 bedeuten + und - für die verschiedenen Tests Folgendes:
a) Abrieb mittels Papiertuch:
   - deutlicher Abrieb, sichtliche dunkle Verfärbung, Rückstand auf Tuch
   + kein bis geringster Abrieb auf Papiertuch
b) Tesa-Abriss:
   - Basecoat verbleibt teilweise nach kohäsivem Bruch im Basecoatfilm auf Tesafilm, dunkle Verfärbung auf Tesafilm
   + erkennbare Verbesserung gegenüber System ohne Topcoat; ggf. noch erkennbarer Abriss nach kohäsivem Bruch, aber geringer, bis hin zu nur geringfügigem Ablösen
c) Salzsprühtest am Ritz bis Rotrost:
   - < 200 h
   + >> 720 h
d) Kondensklima am Ritz bis Rotrost:
   - < 200 h
   + > 200 h bzw. um mindestens 30 % verbessert gegenüber System ohne Topcoat bei gleicher Basecoatschichtdicke

**Tabelle 9: Testergebnisse für verschiedene Kombinationen von Basecoats (BC) und Topcoats (TC): Abrieb mittels Papiertuch, Tesa-Abriss, Salzsprühtest am Ritz bis RR², Kondensklimatest am Ritz bis RR²**

| | BC 1 | BC 2 | BC 3 | BC 4 |
|---|---|---|---|---|
| Kein TC (Vergleich) | **-,-,+,-** | **-,-,+,-** | **-,-,+,-** | **-,-,+,-** |
| Epoxid-TC (Vergleich)¹ | **+,-,-,-** | **+,-,-,-** | **+,-,-,-** | **+,-,-,-** |
| TC A | **+,-,+,+** | **+,-,+,+** | **+,-,+,+** | **+,-,+,+** |
| TC B | **+,-,+,+** | **+,-,+,+** | **+,-,+,+** | **+,-,+,+** |
| TC C | **+,-,+,+** | **+,-,+,+** | **+,-,+,+** | **+,-,+,+** |
| TC D | **+,-,+,+** | **+,-,+,+** | **+,-,+,+** | **+,-,+,+** |
| TC E | **+,+,+,+** | **+,+,+,+** | **+,+,+,+** | **+,+,+,+** |
| TC F | **+,+,+,+** | **+,+,+,+** | **+,+,+,+** | **+,+,+,+** |
| TC G | **+,+,+,-** | **+,+,+,-** | **+,+,+,-** | **+,+,+,-** |
| TC H | **+,+,+,+** | **+,+,+,+** | **+,+,+,+** | **+,+,+,+** |
| TC I | **+,-,+,+** | **+,-,+,+** | **+,-,+,+** | **+,-,+,+** |
| TC J | **+,-,+,+** | **+,-,+,+** | **+,-,+,+** | **+,-,+,+** |

| | | | | |
|---|---|---|---|---|
| ¹ : Lösemittelbasierter Epoxidharzlack ² : RR = Rotrost | | | | |

**Tabelle 10: Testergebnisse für verschiedene Kombinationen von Basecoats (BC) und Topcoats (TC): Abrieb mittels Papiertuch, Tesa-Abriss, Salzsprühtest am Ritz bis RR², Kondensklimatest am Ritz bis RR²**

| | BC 5 | BC 6 | BC 7 | BC 8 |
|---|---|---|---|---|
| Kein TC (Vergleich) | **-,-,+,-** | **-,-,+,-** | **-,-,+,-** | **-,-,+,-** |
| Epoxid-TC (Vergleich)¹ | **+,-,-,-** | **+,-,-,-** | **+,-,-,-** | **+,-,-,-** |
| TC A | **+,-,+,+** | **+,-,+,+** | **+,-,+,+** | **+,-,+,+** |
| TC B | **+,-,+,+** | **+,-,+,+** | **+,-,+,+** | **+,-,+,+** |
| TC C | **+,-,+,+** | **+,-,+,+** | **+,-,+,+** | **+,-,+,+** |
| TC D | **+,-,+,+** | **+,-,+,+** | **+,-,+,+** | **+,-,+,+** |
| TC E | **+,+,+,+** | **+,+,+,+** | **+,+,+,+** | **+,+,+,+** |
| TC F | **+,+,+,+** | **+,+,+,+** | **+,+,+,+** | **+,+,+,+** |
| TC G | **+,+,+,-** | **+,+,+,-** | **+,+,+,-** | **+,+,+,-** |
| TC H | **+,+,+,+** | **+,+,+,+** | **+,+,+,+** | **+,+,+,+** |
| TC I | **+,-,+,+** | **+,-,+,+** | **+**,**-,+,+,+** | **+,-,+,+** |
| TC J | **+,-,+,+** | **+,-,+,+** | **+,-,+,+,+** | **+,-,+,+** |

| | | | | |
|---|---|---|---|---|
| ¹ : Lösemittelbasierter Epoxidharzlack ² : RR = Rotrost | | | | |

**Tabelle 11: Testergebnisse für verschiedene Kombinationen von Basecoats (BC) und Topcoats (TC): Abrieb mittels Papiertuch, Tesa-Abriss, Salzsprühtest am Ritz bis RR², Kondensklimatest am Ritz bis RR²**

| | BC 9 | BC 10 | BC 11 | BC 12 |
|---|---|---|---|---|
| Kein TC (Vergleich) | **-,-,+,-** | **-,-,+,-** | -,-,+,- | **-,-,+,-** |
| Epoxid-TC (Vergleich)¹ | **+,-,-,-** | **+,-,-,-** | **+,-,-,-** | **+,-,-,-** |
| TC A | **+,-,+,+** | **+,-,+,+** | **+,-,+,+** | **+,-,+,+** |
| TC B | **+,-,+,+** | **+,-,+,+** | **+,-,+,+** | **+,-,+,+** |
| TC C | **+,-,+,+** | **+,-,+,+** | **+,-,+,+** | **+,-,+,+** |
| TC D | **+,-,+,+** | **+,-,+,+** | **+,-,+,+** | **+,-,+,+** |
| TC E | **+,+,+,+** | **+,+,+,+** | **+,+,+,+** | **+,+,+,+** |
| TC F | **+,+,+,+** | **+,+,+,+** | **+,+,+,+** | **+,+,+,+** |
| TC G | **+,+,+,-** | **+,+,+,-** | **+,+,+,-** | **+,+,+,-** |
| TC H | **+,+,+,+** | **+,+,+,+** | **+,+,+,+** | **+,+,+,+** |
| TC I | **+,-,+,+** | **+,-,+,+** | **+,-,+,+** | **+,-,+,+** |
| TC J | **+,-,+,+** | **+,-,+,+** | **+,-,+,+** | **+,-,+,+** |

| | | | | |
|---|---|---|---|---|
| ¹ : Lösemittelbasierter Epoxidharzlack ² : RR = Rotrost | | | | |

**Tabelle 12: Testergebnisse für verschiedene Kombinationen von Basecoats (BC) und Topcoats (TC): Abrieb mittels Papiertuch, Tesa-Abriss, Salzsprühtest am Ritz bis RR², Kondensklimatest am Ritz bis RR²**

| | BC 13 | BC 14 |
|---|---|---|
| Kein TC (Vergleich) | **-,-,+,-** | **-,-,+,-** |
| Epoxid-TC (Vergleich)¹ | **+,-,-,-** | **+,-,-,-** |
| TC A | **+,-,+,+** | **+,-,+,+** |
| TC B | **+,-,+,+** | **+,-,+,+** |
| TC C | **+,-,+,+** | **+,-,+,+** |
| TC D | **+,-,+,+** | **+,-,+,+** |
| TC E | **+,+,+,+** | **+,+,+,+** |
| TC F | **+,+,+,+** | **+,+,+,+** |
| TC G | **+,+,+,-** | **+,+,+,-** |
| TC H | **+,+,+,+** | **+,+,+,+** |
| TC I | **+,-,+,+** | **+,-,+,+** |
| TC J | **+,-,+,+** | **+,-,+,+** |

| | | |
|---|---|---|
| ¹ : Lösemittelbasierter Epoxidharzlack ² : RR = Rotrost | | |

Es zeigt sich, dass das Vergleichsbeispiel, welches nur mit einem Basecoat und nicht mit einem Topcoat beschichtet wurde, einen deutlich höheren Abrieb beim Abriebtest mit dem Papiertuch aufweist und auch im Testabriss deutlich schlechtere Werte liefert. Der Korrosionsschutz im Salzsprühtest am Ritz ist für das nur mit einem Basecoat versehene Stahlblech durchgängig sehr gut, so wird ein kathodischer Korrosionsschutz von über 1.000 Stunden bis zum Auftreten von Rotrost beobachtet. Der Kondensklimatest liefert jeweils akzeptable Werte, ist allerdings deutlich schlechter als bei zweischichtigen Beschichtungen, insbesondere im Fall einer Verwendung von Topcoats mit ionischen Anteilen.

Das zweite Vergleichsbeispiel mit einem epoxidharzbasierten Topcoat zeigt eine deutlich verbesserte Abriebfestigkeit im Abriebtest mit einem Papiertuch, jedoch gleichfalls sehr schlechte Werte im Tesa-Abrisstest. Die Testergebnisse im Salzsprühtest am Ritz sind schlechter als bei den nur mit einem Basecoat beschichteten Systemen, was auf die fehlende Aktivierung der Zinklamellen durch Elektrolyte zurückzuführen ist.. Im Kondensklimatest am Ritz zeigen die mit einem epoxidharzbasierten Topcoat beschichteten Systeme ähnlich schlechte Eigenschaften wie Systeme ohne Topcoat. Die erfindungsgemäßen Beispiele weisen hingegen durchgängig deutlich bessere Eigenschaften auf.

### 2. Beschichtung von Bremsscheiben

6 Bremscheiben werden 15 Minuten bei 65 bis 70 °C alkalisch gereinigt und danach gespült und mittels eines Luftgebläses impulsgetrocknet. Zur partiellen Beschichtung der Bremscheiben wird jeweils der Lochkreis mit einem speziellen Klebeband, welches keinen Kleberückstand hinterlässt, abgeklebt.

Anschließend erfolgt die Beschichtung der 6 Bremscheiben mittels Spritzpistole mit einem Basecoat gemäß der oben in Tabelle 3 angegebenen Formulierung 10 in einer Schichtdicke von ca. 10 µm. Die Bremscheiben werden 30 Minuten bei 80 °C getrocknet und im Anschluss mittels Luftgebläse handwarm abgekühlt.

Im nächsten Schritt folgt die Beschichtung der kompletten Oberfläche der Bremscheiben einschließlich Lochkreis, mit einem wässrig basierten Topcoat.

Zur weiteren Beschichtung der Bremscheiben werden die oben in Tabelle 5 angegebene Topcoat-Formulierung A sowie zwei weitere Topcoat-Formulierungen K und L verwendet. Topcoat-Formulierung K ist eine wässrig basierte Polymersuspension auf Basis von Polyurethan und Polyacrylaten, welcher geringe Mengen an Hexafluortitansäure enthält.

Topcoat L besteht aus dem polymeren Bindemittelsystem von Topcoat K, jedoch ohne weitere Zusätze.

Die Topcoat-Zusammensetzungen werden mit einer Schichtdicke von 2 bis 4 µm mittels Sprühauftrag vollflächig auf die Bremscheiben aufgebracht.

Anschließend werden die Bremscheiben einem neutralen Salzsprühtest unterzogen und das Ergebnis nach 2 Stunden, 4 Stunden, 6 Stunden und 24 Stunden dokumentiert. Die Ergebnisse des neutralen Salzsprühtests sind in Tabelle 13 zusammengefasst.

Es zeigt sich, dass die polymeren Beschichtungen K und L deutlich bessere Ergebnisse erzielen als die reine Wasserglasbeschichtung gemäß Topcoat A. insbesondere wird auf den nicht mehr kathodischen Korrosionsschutz ausgestatteten Flächen der Bremscheiben bei Verwendung des Topcoats A bereits nach 2 Stunden Rotrost beobachtet, und dies in bereits beträchtlichem Ausmaß. Die Topcoat-Formulierung K, d. h. das polymere Bindemittel, welches noch ionische Bestandteile, nämlich Hexafluortitansäure, enthält, zeigt anfangs eine schwache und später eine ausgeprägte homogene Gelbfärbung des nur mit dem Topcoat beschichteten Teils der Scheibe. Hierbei handelt es sich um gleichmäßig und schwach auftretenden Rotrost, der mit dem bloßen Auge allerdings nicht als solcher erkennbar ist. Erste größere Rotrostflecken auf der nicht mit kathodischem Korrosionsschutz ausgerüsteten Fläche zeigen sich erst nach 24 Stunden.

Die besten Ergebnisse liefert das polymere Topcoat-System gemäß Topcoat-Formulierung L: Hier zeigt sich zwar nach 2 Stunden gleichfalls erster Rotrost, jedoch ist dieser nur äußerst kleinflächig und vereinzelt zu erkennen. Erst nach 24 Stunden zeigt sich ein deutlich wahrnehmbarer Befall mit Rotrost.

**Tabelle 13: Ergebnisse der beschichteten Bremscheiben im neutralen Salzsprühtest; Schichtdicke des Topcoats: 2 bis 4 µm**

| Dauer | Topcoat A | Topcoat K | Topcoat L |
|---|---|---|---|
| 2 h | Rotrost auf der mit Klarlack beschichteten Fläche. | Gelbverfärbung auf der mit Klarlack beschichteten Fläche, aber kein Rotrost. | Vereinzelt Rotrost auf der mit Klarlack beschichteten Fläche. |
| 4 h | Rotrost auf der mit Klarlack beschichteten Fläche. | Gelbverfärbung auf der mit Klarlack beschichteten Fläche, aber kein Rotrost. | Vereinzelt Rotrost auf der mit Klarlack beschichteten Fläche. |
| 6 h | Verstärkter Rotrost auf der nur mit Klarlack beschichteten Fläche | Gelbverfärbung auf der mit Klarlack beschichteten Fläche, aber kein Rotrost. | Vereinzelt Rotrost auf der mit Klarlack beschichteten Fläche. |
| 24 h | Rotrost auf der gesamten Fläche, die nur mit Klarlack beschichtet ist | Aus der Gelbverfärbung auf der mit Klarlack beschichteten Fläche ist Rotrost entstanden. | Vereinzelt Rotrost auf mit der Klarlack beschichteten Fläche. |

Der zuvor beschriebene Test wird wiederholt, wobei die Topcoats jedoch durch zweifache Applikation mit einer Schichtdicke von 4 bis 8 µm aufgetragen werden. Die Ergebnisse sind in Tabelle 14 zusammengestellt.

**Tabelle 14: Ergebnisse der beschichteten Bremscheiben im neutralen Salzsprühtest; Schichtdicke des Topcoats: 8 µm**

| Dauer | Topcoat A | Topcoat K | Topcoat L |
|---|---|---|---|
| 2 h | Rotrost auf der mit Klarlack beschichteten Fläche. | Kein Rotrost, Bremsscheibe unverändert | Kein Rotrost, Bremsscheibe unverändert |
| 4 h | Rotrost auf der mit Klarlack beschichteten Fläche. | Kein Rotrost, Bremsscheibe unverändert | Kein Rotrost, Bremsscheibe unverändert |
| 6 h | Verstärkter Rotrost auf der nur mit Klarlack beschichteten Fläche | Gelbverfärbung auf der mit Klarlack beschichteten Fläche, aber kein Rotrost. | Kein Rotrost, Bremsscheibe unverändert |
| 24 h | Massiver Rotrost, der sich im Laufe des Salzsprühtests weiter verstärkt | Rotrost partiell auf Teilen der nur mit Topcoat beschichteten Fläche (< 20 %) | Kein Rotrost auf der nur mit Topcoat beschichteten Fläche, allerdings RR-Laufspuren von den unbeschichteten Kanten und Bohrungen/ Löchern |
| 48 h | Massiver Rotrost, der sich im Laufe des Salzsprühtests weiter verstärkt | Lokaler Rotrost auf Teilen der nur mit Topcoat beschichteten Fläche (< 25 %) | Kein Rotrost auf der nur mit Topcoat beschichteten Fläche, allerdings RR-Laufspuren von den unbeschichteten Kanten und Bohrungen/ Löchern |

**Tabelle 14 Fortsetzung**

| | | | |
|---|---|---|---|
| 72 h | Massiver Rotrost, der sich im Laufe des Salzsprühtests weiter verstärkt | Lokaler Rotrost auf Teilen der nur mit Topcoat beschichteten Fläche (< 40 %) | Kein Rotrost auf der nur mit Topcoat beschichteten Fläche, allerdings verstärkte RR-Laufspuren von den unbeschichteten Kanten und Bohrungen/ Löchern |
| 96 h | Massiver Rotrost, der sich im Laufe des Salzsprühtests weiter verstärkt | Lokaler Rotrost auf Teilen der nur mit Topcoat beschichteten Fläche, (< 40 %) | Rotrost auf der nur mit Topcoat beschichteten Fläche auch an beschichteten Kanten, verstärkte RR-Laufspuren von den unbeschichteten Kanten und Bohrungen/ Löchern |
| 165 h | Massiver Rotrost, der sich im Laufe des Salzsprühtests weiter verstärkt | Rotrost auf Teilen der nur mit Topcoat beschichteten Fläche (< 50 %) | Sich verstärkender Rotrost auf der nur mit Topcoat beschichteten Fläche auch an beschichteten Kanten, verstärkte RR-Laufspuren von den unbeschichteten Kanten und Bohrungen/ Löchern, ansonsten ist die Fläche weitgehend noch silbern blank (mind. 80%) |

Es zeigt sich, dass die mit ionische Gruppen enthaltenden organischen Polymeren beschichteten Systeme bei doppelter Auftragsdicke deutlich verbesserte Korrosionsschutzeigenschaften aufweisen.

### Bezugszeichenliste:

| | | | |
|---|---|---|---|
| 1 | Beschichtungssystem | 3 | erste Schicht |
| 2 | Substrat | 4 | zweite Schicht |

## Patentansprüche

1. Beschichtungssystem (1), insbesondere Korrosionsschutzbeschichtungssystem, zur Erzeugung eines kathodischen Korrosionsschutzes auf einem metallischen Substrat (2), aufweisend mindestens zwei Schichten,
**dadurch gekennzeichnet,**
**dass** das Beschichtungssystem umfasst
(a) eine erste Schicht (3) in Form einer kathodischen Korrosionsschutzbeschichtung, welche unter Einwirkung von Feuchtigkeit bei Temperaturen von weniger als 100 °C vernetzt,
wobei die erste Schicht (3) aus einer Beschichtungszusammensetzung erhalten ist, welche mindestens ein Lösemittel aufweist, und
(b) eine zweite Schicht (4) in Form einer Beschichtung, welche durch eine wässrig basierte Beschichtungszusammensetzung erhalten ist,
wobei die zweite Schicht (4) mindestens eine hydrophile anorganische oder organische polymere Verbindung enthält, und
wobei die anorganische oder organische polymere Verbindung ionische Anteile aufweist und/oder die Beschichtungszusammensetzung zusätzlich ionische Bestandteile in Mengen von 0,1 bis 5 Gew.-%, bezogen auf die Beschichtungszusammensetzung, enthält.

2. Beschichtungssystem nach Anspruch 1, **dadurch gekennzeichnet, dass** die erste Schicht (3) ein eine anorganisch basierte Matrix aufweist, insbesondere wobei die Matrix organisch modifiziert ist.

3. Beschichtungssystem nach Anspruch 1 oder 2, **dadurch gekennzeichnet, dass** die anorganisch basierte Matrix anorganische Oxide, insbesondere Oxide des Siliciums, Titans und/oder Zirkoniums, vorzugsweise Siliciumdioxid und/oder Titandioxid, bevorzugt Titandioxid, enthält oder insbesondere zumindest im Wesentlichen hieraus besteht.

4. Beschichtungssystem nach einem der vorangehenden Ansprüche, **dadurch gekennzeichnet, dass** die erste Schicht durch Einwirkung von Luftfeuchtigkeit vernetzt.

5. Beschichtungssystem nach einem der vorangehenden Ansprüche, **dadurch gekennzeichnet, dass** die erste Schicht bei Temperaturen von weniger als 100 °C, insbesondere weniger 90 °C, vorzugsweise weniger als 80 °C, vernetzt.

6. Beschichtungssystem nach einem der vorangehenden Ansprüche, **dadurch gekennzeichnet, dass** die erste Schicht bei Temperaturen im Bereich von 5 und 30 °C vernetzt und/oder dass die erste Schicht bei Temperaturen im Bereich von 20 bis 100 °C, insbesondere 30 bis 90 °C, vorzugsweise 50 bis 80 °C, vernetzt.

7. Beschichtungssystem nach einem der vorangehenden Ansprüche, **dadurch gekennzeichnet, dass** die erste Schicht (3) Metallpartikel enthält.

8. Beschichtungssystem nach Anspruch 7, **dadurch gekennzeichnet, dass** die erste Schicht (3) mindestens 50 Gew.-%, insbesondere mindestens 60 Gew.-%, vorzugsweise mindestens 70 Gew.-%, Metallpartikel, bezogen auf die erste Schicht, aufweist und/oder
dass die erste Schicht (3) einen Anteil an Metallpartikeln im Bereich von 50 bis 95 Gew.-%, insbesondere 60 bis 95 Gew.-%, vorzugsweise 70 bis 90 Gew.-%, bezogen auf die erste Schicht, aufweist.

9. Beschichtungssystem nach Anspruch 7 oder 8, **dadurch gekennzeichnet, dass** die erste Schicht (3) plättchenförmige und/oder kornförmige, insbesondere sphärische, Metallpartikel, vorzugsweise kornförmige, insbesondere sphärische, Metallpartikel, aufweist.

10. Beschichtungssystem nach einem der Ansprüche 7 bis 9, **dadurch gekennzeichnet, dass** die Metallpartikel auf Basis von Aluminium, Zink oder deren Legierungen, insbesondere auf Basis von reinem Zink und/oder von Zinklegierungen ausgebildet sind.

11. Beschichtungssystem nach einem der vorangehenden Ansprüche, **dadurch gekennzeichnet, dass** die zweite Schicht (4) in Form einer transparenten Schicht, insbesondere eines Klarlacks, ausgebildet ist.

12. Beschichtungssystem nach einem der vorangehenden Ansprüche, **dadurch gekennzeichnet, dass** die zweite Schicht (4) aus mindestens einer hydrophilen organischen polymeren Verbindung insbesondere zumindest im Wesentlichen besteht.

13. Beschichtungssystem nach einem der vorangehenden Ansprüche, **dadurch gekennzeichnet, dass** das Substrat mindestens ein Metall ausgewählt aus Aluminium und Eisen, vorzugsweise Eisen, enthält oder aus dessen Legierungen besteht, insbesondere wobei das Substrat aus Stahl besteht.

14. Verfahren zur Herstellung eines Beschichtungssystem (1), insbesondere eines Korrosionsschutzbeschichtungssystems, nach einem der Ansprüche 1 bis 13, zur Erzeugung eines kathodischen Korrosionsschutzes auf einem metallischen Substrat (2),
**dadurch gekennzeichnet,**
**dass**
(A) in einem ersten Verfahrensschritt eine erste insbesondere zumindest im Wesentlichen wasserfreie und unter Einwirkung von Wasser vernetzende Beschichtungszusammensetzung, zur Erzeugung einer kathodischen Korrosionsschutzbeschichtung, auf ein metallisches Substrat aufgebracht wird, so dass eine erste Schicht gebildet wird, und auf Temperaturen von weniger als 100 °C erwärmt wird und
(B) in einem auf den ersten Verfahrensschritt (A) folgenden zweiten Verfahrensschritt eine wässrig basierte zweite Beschichtungszusammensetzung auf die erste Schicht aufgebracht wird, wobei die zweite Schicht (4) mindestens eine hydrophile anorganische oder organische polymere Verbindung enthält, wobei die anorganische oder organische polymere Verbindung ionische Anteile aufweist und/oder die Beschichtungszusammensetzung zusätzlich ionische Bestandteile in Mengen von 0,1 bis 5 Gew.-%, bezogen auf die Beschichtungszusammensetzung, enthält, wobei nach Aufbringung der zweiten Beschichtungszusammensetzung die erste Beschichtungszusammensetzung unter Einwirkung von Feuchtigkeit vernetzt wird.

15. Verfahren nach Anspruch 14, **dadurch gekennzeichnet, dass** in Verfahrensschritt (B) nach Aufbringung der zweiten Beschichtungszusammensetzung die erste Beschichtungszusammensetzung unter Einwirkung von Luftfeuchtigkeit, vernetzt wird.

16. Metallisches Substrat, aufweisend ein Beschichtungssystem nach einem der Ansprüche 1 bis 13.

17. Kit zur Herstellung eines Beschichtungssystems nach einem der Ansprüche 1 bis 13, umfassend eine erste Beschichtungszusammensetzung, insbesondere eine kathodische Korrosionsschutzbeschichtungszusammensetzung, und eine zweite Beschichtungszusammensetzung, insbesondere eine Deckschichtzusammensetzung.

## Claims

1. Coating system (1), in particular corrosion protection coating system, for producing cathodic corrosion protection on a metallic substrate (2), comprising at least two layers, **characterized in that**
the coating system comprises
(a) a first layer (3) in the form of a cathodic corrosion protection coating which cross-links under the action of moisture at temperatures of less than 100 °C,
wherein the first layer (3) is obtained from a coating composition comprising at least one solvent, and
(b) a second layer (4) in the form of a coating obtained from an aqueous-based coating composition,
wherein the second layer (4) comprises at least one hydrophilic inorganic or organic polymeric compound, and
wherein the inorganic or organic polymeric compound comprises ionic components and/or the coating composition additionally comprises ionic components in amounts of 0.1 to 5 wt.%, based on the coating composition.

2. Coating system according to claim 1, **characterized in that** the first layer (3) comprises an inorganically based matrix, in particular wherein the matrix is organically modified.

3. Coating system according to claim 1 or 2, **characterized in that** the inorganic-based matrix contains inorganic oxides, in particular oxides of silicon, titanium and/or zirconium, preferably silicon dioxide and/or titanium dioxide, more preferably titanium dioxide, or in particular consists at least substantially thereof.

4. Coating system according to one of the preceding claims, **characterized in that** the first layer is cross-linked by the action of atmospheric moisture.

5. Coating system according to one of the preceding claims, **characterized in that** the first layer is cross-linked at temperatures of less than 100 °C, in particular less than 90 °C, preferably less than 80 °C.

6. Coating system according to one of the preceding claims, **characterized in that** the first layer cross-links at temperatures in the range of 5 and 30 °C and/or that the first layer cross-links at temperatures in the range of 20 to 100 °C, in particular 30 to 90 °C, preferably 50 to 80 °C.

7. Coating system according to one of the preceding claims, **characterized in that** the first layer (3) contains metal particles.

8. Coating system according to claim 7, **characterized in that** the first layer (3) comprises at least 50 wt.%, in particular at least 60 wt.%, preferably at least 70 wt.%, of metal particles, based on the first layer and/or
**in that** the first layer (3) comprises a proportion of metal particles in the range from 50 to 95 wt.%, in particular 60 to 95 wt.%, preferably 70 to 90 wt.%, based on the first layer.

9. Coating system according to claim 7 or 8, **characterized in that** the first layer (3) comprises platelet-shaped and/or grain-shaped, in particular spherical, metal particles, preferably grain-shaped, in particular spherical, metal particles.

10. Coating system according to one of the claims 7 to 9, **characterized in that** the metal particles are based on aluminum, zinc or their alloys, in particular are based on pure zinc and/or on zinc alloys.

11. Coating system according to one of the preceding claims, **characterized in that** the second layer (4) is configured in the form of a transparent layer, in particular a clear lacquer.

12. Coating system according to one of the preceding claims, **characterized in that** the second layer (4) consists of at least one hydrophilic organic polymeric compound, in particular at least substantially.

13. Coating system according to one of the preceding claims, **characterized in that** the substrate comprises at least one metal selected from aluminum and iron, preferably iron, or consists of alloys thereof, in particular wherein the substrate consists of steel.

14. Method for producing a coating system (1), in particular a corrosion protection coating system, according to one of the claims 1 to 13, for producing a cathodic corrosion protection on a metallic substrate (2),
**characterized in that**
(A) in a first method step, a first, in particular at least substantially water-free and under the action of water cross-linking, coating composition for producing a cathodic corrosion protection coating is applied to a metallic substrate so that a first layer is formed, and is heated to temperatures of less than 100°C, and
(B) in a second method step following the first method step (A), an aqueous-based second coating composition is applied to the first layer, wherein the second layer (4) comprises at least one hydrophilic inorganic or organic polymeric compound, wherein the inorganic or organic polymeric compound comprises ionic components and/or the coating composition additionally comprises ionic components in amounts of 0.1 to 5 wt.- %, based on the coating composition, wherein after application of the second coating composition the first coating composition is cross-linked under the action of moisture.

15. Method according to claim 14, **characterized in that** in method step (B), after application of the second coating composition, the first coating composition is cross-linked under the action of atmospheric moisture.

16. A metallic substrate comprising a coating system according to any one of the claims 1 to 13.

17. Kit for producing a coating system according to one of the claims 1 to 13, comprising a first coating composition, in particular a cathodic corrosion protection coating composition, and a second coating composition, in particular a topcoat composition.

## Revendications

1. Système de revêtement (1), en particulier système de revêtement de protection contre la corrosion, pour la réalisation d'une protection cathodique contre la corrosion sur un substrat métallique (2), comportant au moins deux couches,
**caractérisé en ce**
**que** le système de revêtement comprend
(a) une première couche (3) sous forme d'un revêtement de protection cathodique contre la corrosion, qui réticule sous l'action de l'humidité à des températures inférieures à 100 °C,
dans lequel la première couche (3) est obtenue à partir d'une composition de revêtement, qui contient au moins un solvant, et
(b) une seconde couche (4) sous la forme d'un revêtement obtenu à partir d'une composition de revêtement à base aqueuse,
dans lequel la seconde couche (4) contient au moins un composé polymère inorganique ou organique hydrophile, et
le composé polymère inorganique ou organique présentant des parties ioniques et/ou la composition de revêtement contient en outre des composants ioniques à raison de 0,1 à 5 % en poids, rapporté à la composition de revêtement.

2. Système de revêtement selon la revendication 1, **caractérisé en ce que** la première couche (3) présente une matrice à base inorganique, en particulier dans lequel la matrice est modifiée organiquement.

3. Système de revêtement selon la revendication 1 ou 2, **caractérisé en ce que** la matrice à base inorganique contient des oxydes inorganiques, en particulier des oxydes de silicium, de titane et/ou de zirconium, de préférence du dioxyde de silicium et/ou du dioxyde de titane, de préférence du dioxyde de titane, ou en particulier, consiste au moins essentiellement en ceux-ci.

4. Système de revêtement selon l'une des revendications précédentes, **caractérisé en ce que** la première couche réticule sous l'action de l'humidité atmosphérique.

5. Système de revêtement selon l'une des revendications précédentes, **caractérisé en ce que** la première couche réticule à des températures inférieures à 100 °C, en particulier inférieures à 90 °C, de préférence inférieures à 80 °C.

6. Système de revêtement selon l'une des revendications précédentes, **caractérisé en ce que** la première couche réticule à des températures situées dans la plage allant de 5 à 30 °C et/ou que la première couche réticule à des températures situées dans la plage allant de 20 à 100 °C, en particulier 30 à 90 °C, de préférence 50 à 80 °C.

7. Système de revêtement selon l'une des revendications précédentes, **caractérisé en ce que** la première couche (3) contient des particules métalliques.

8. Système de revêtement selon la revendication 7, **caractérisé en ce que** la première couche (3) présente au moins 50 % en poids, notamment au moins 60 % en poids, de préférence au moins 70 % en poids, de particules métalliques, rapporté à la première couche, et/ou
**en ce que** la première couche (3) présente une proportion de particules métalliques située dans la plage allant de 50 à 95 % en poids, notamment de 60 à 95 % en poids, de préférence de 70 à 90 % en poids, rapporté à la première couche.

9. Système de revêtement selon la revendication 7 ou 8, **caractérisé en ce que** la première couche (3) présente des particules métalliques en forme de plaquettes et/ou granulaires, notamment des particules métalliques sphériques, de préférence des particules métalliques granulaires, notamment sphériques.

10. Système de revêtement selon l'une des revendications 7 à 9, **caractérisé en ce que** les particules métalliques sont formées à base d'aluminium, de zinc ou de leurs alliages, notamment à base de zinc pur et/ou d'alliages de zinc.

11. Système de revêtement selon l'une des revendications précédentes, **caractérisé en ce que** la seconde couche (4) se présente sous la forme d'une couche transparente, notamment d'un vernis incolore.

12. Système de revêtement selon l'une des revendications précédentes, **caractérisé en ce que** la seconde couche (4) consiste en au moins un composé polymère organique hydrophile, notamment consiste essentiellement en celui-ci.

13. Système de revêtement selon l'une des revendications précédentes, **caractérisé en ce que** le substrat contient au moins un métal choisi parmi l'aluminium et le fer, de préférence le fer, ou est constitué d'alliages de ceux-ci, notamment le substrat étant constitué d'acier.

14. Procédé de réalisation d'un système de revêtement (1), notamment un système de revêtement de protection contre la corrosion, selon l'une des revendications 1 à 13, pour la réalisation d'une protection cathodique contre la corrosion sur un substrat métallique (2),
**caractérisé en ce**
**que**
(A) dans une première étape de procédé, une première composition de revêtement, qui est au moins essentiellement exempte d'eau et réticule sous l'action de l'eau, est appliquée sur un substrat métallique pour produire un revêtement de protection cathodique contre la corrosion, de sorte qu'une première couche est formée, et chauffée à des températures inférieures à 100 °C, et
(B) dans une seconde étape de procédé suivant la première étape de procédé (A), une seconde composition de revêtement à base aqueuse est appliquée sur la première couche, la seconde couche (4) contenant au moins un composé polymère inorganique ou organique hydrophile, le composé polymère inorganique ou organique présentant une proportion ionique et/ou la composition de revêtement contenant en outre des composants ioniques à raison de 0,1 à 5 % en poids, rapporté à la composition de revêtement, la première composition de revêtement étant réticulée sous l'action de l'humidité après l'application de la seconde composition de revêtement.

15. Procédé selon la revendication 14, **caractérisé en ce que** dans l'étape de procédé (B) après application de la seconde composition de revêtement, la première composition de revêtement est réticulée sous l'action de l'humidité atmosphérique.

16. Substrat métallique comprenant un système de revêtement selon l'une quelconque des revendications 1 à 13.

17. Kit de production d'un système de revêtement selon l'une des revendications 1 à 13, comprenant une première composition de revêtement, notamment une composition de revêtement de protection cathodique contre la corrosion, et une seconde composition de revêtement, notamment une composition de finition.
